# EUROPEAN PATENT SPECIFICATION

(11) **EP 3 145 720 B1**
(45) Date of publication and mention of the grant of the patent: **08.03.2023**
(21) Application number: 14892799.9
(22) Date of filing: 20.05.2014
(51) Int. Cl.: B41J 2/00, B41J 23/00, B41J 3/54

(54) **PRINTING SYSTEM AND METHOD**
DRUCKSYSTEM UND VERFAHREN
SYSTÈME ET PROCÉDÉ D'IMPRESSION

(43) Date of publication of application: 29.03.2017
(60) Divisional application: 23150045.5
(73) Proprietor: Velox-Puredigital Ltd., 48091 Rosh Haiin (IL)
(72) Inventor: LITVINOV, Alexander, 4249098 Netanya (IL); COFLER, Marian, 4249098 Kfar Yona (IL); FEINSCHMIDT, Avi, 5841021 Holon (IL); COFLER, Adrian, 7080000 Gan Yavne (IL)
(74) Representative: Becker Kurig & Partner Patentanwälte mbB
(86) International application number: PCT/IB2014/061570
(87) International publication number: WO 2015/177599

(56) References cited:
- EP-A1- 1 679 189
- EP-A1- 2 639 069
- DE-A1-102005 052 506
- GB-A- 1 203 629
- GB-A- 2 035 873
- JP-A- 2009 184 118
- JP-A- 2011 224 910
- US-A1- 2009 044 713
- US-A1- 2010 295 885

## Description

### TECHNOLOGICAL FIELD

The invention is generally in the field of digital printing and relates to a printing system for printing on curved surfaces.

### BACKGROUND

Digital printing is a printing technique commonly used in the printing industry, as it allows for on-demand printing, short turn-around, and even a modification of the image (variable data) with each impression. Some of the techniques developed for printing on a surface of a three-dimensional object are described hereinbelow.

US Patent No. 7,467,847 relates to a printing apparatus adapted for printing on a printing surface of a three-dimensional object. The apparatus comprises an inkjet printhead having a plurality of nozzles, and being operative to effect relative movement of the printhead and the object, during printing, with a rotational component about an axis of rotation and with a linear component, in which the linear component is at least partially in a direction substantially parallel with the axis of rotation and wherein the nozzle pitch of the printhead is greater than the grid pitch to be printed onto the printing surface in the nozzle row direction.

US Patent No. 6,769,357 relates to a digitally controlled can printing apparatus for printing on circular two-piece cans, the apparatus including digital print-heads for printing an image on the cans and drives for transporting and rotating the cans in front of the print-heads in registered alignment.

US Patent Application No. 2010/0295885 describes an ink jet printer for printing on a cylindrical object using printheads positioned above a line of travel and a carriage assembly configured to hold the object axially aligned along the line of travel and to position the object relative to the printheads, and rotate it relative to the printheads. A curing device located along the line of travel is used to emit energy suitable to cure the deposited fluid.

The document DE 10 2005 052506 A1 discloses a mandrel for holding a hollow body, for example for printing on the outer surface of the hollow body.

### GENERAL DESCRIPTION

There is a need in the art for printing techniques that allow expediting the printing process while enabling maximal utilization (high efficiency) of the printing technology by allowing printing on objects having curved surfaces of various sizes, as well as provide efficient inspection of the pattern being printed on the curved surface.

It is also required that such printing techniques enables simultaneous printing on multiple objects, and retain a relatively high printing resolution, with very high system accuracies (microns), which makes inkjet printing technology very challenging for real production line use. Therefore, maintaining a high efficiency level by maximizing the printing engine utilization is necessary in such techniques to perform production runs.

In the above-mentioned patent publications (US 7,467,847 and US 6,769,357), printing takes place at discrete printing stations and is interrupted while the object is transported between printing stations. This interruption significantly slows the printing process. The inventor of the present invention has developed novel printing techniques enabling conducting a fast and efficient printing process on curved (and/or flat) surfaces of a plurality of objects streamed into the printing system from a production line.

The present invention is aimed at expediting the printing process, by providing a print head assembly which includes a plurality of print head units, where the print head units are arranged in a corresponding plurality of different (e.g., spaced-apart) locations along an axis of translation.

The invention is defined in claim 1, preferred embodiments in the dependent claims.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** schematically illustrates a printing system according to some possible embodiments employing a closed loop lane to translate objects therealong;
**Figs. 2A** and **2B** are schematic drawings illustrating different configurations of a print head assembly, which includes a plurality of print head units located at successive positions along an axis of translation;
**Figs. 3A** and **3B** are schematic drawings illustrating possible arrangements of printing elements on single print head units;
**Figs. 4A** and **4B** are schematic drawings illustrating different views of the printing array, which includes a plurality of groups of print head units located at successive positions along an axis of translation;
**Figs. 5A** and **5B** are schematic drawings exemplifying use of a system;
**Figs. 6A** and **6B** are schematic drawings illustrating some possible configurations in which the print head units are controllably movable;
**Figs. 7A** and **7B** are schematic drawings exemplifying possible configurations in which the print head units are controllably movable to fit a shape of the object, before and during rotation of the object;
**Fig. 8A** is a schematic drawing exemplifying some configurations in which the print head units belonging to the same group are positioned at the same location along the axis of translation;
**Fig. 8B** is a schematic drawing exemplifying some configurations in which the print head units belonging to the same group are staggered, being positioned at different locations along the axis of translation;
**Fig. 9A** is schematic drawing exemplifying some configurations in which at least one curing/fixing station is located at the end of the print unit assembly, downstream of the last group of print head units and/or in which at least one priming/pretreatment station is located at the beginning of the print unit assembly, upstream from first group of print head units;
**Fig. 9B** is schematic drawing exemplifying some configurations in which at least one curing/fixing station and/or priming/pretreatment station is located between two successive groups of print head units;
**Fig. 9C** is a schematic drawing exemplifying some configurations in which a plurality of curing/fixing and/or priming/pretreatment stations are positioned one after the other along the axis of translation;
**Fig. 9D** is a schematic drawing exemplifying some configurations in which at least one curing/fixing and/or priming/pretreatment unit is located between print head units of the same group;
**Figs 10A** to **10C** are schematic drawings illustrating some configurations in which first and second compositions are jetted on the same location of the object's surface by print head units of first and second groups respectively, in order to print the location with a third composition which is formed by a combination of the first and second compositions;
**Figs. 11A** to **11C** are schematic drawings illustrating some configurations in which first and second compositions are jetted on the same location of the object's surface by different nozzles belonging to a single print head unit, in order to print the location with a third composition which is formed by a combination of the first and second compositions;
**Figs 12A** to **12C** are schematic drawings illustrating some configurations in which first and second compositions are jetted on the same location of the object's surface by respectively first and second print head units of the same group, in order to print the location with a third composition which is formed by a combination of the first and second compositions;
**Fig. 13A** and **13B** are schematic drawings exemplifying possible configurations in which printing units belonging to different groups are located at the same position around the axis of translation, and are organized in bars/columns;
**Fig. 14** is a block diagram illustrating a control unit usable according to some possible embodiments to control the conveyor system and print head assembly according to one or more kinds of input data;
**Fig. 15** schematically illustrates a conveyor system according to some possible embodiments;
**Figs. 16A** and **16B** schematically illustrate arrangement of the print head assembly in the form of an array according to some possible embodiments;
**Fig. 17** schematically illustrates a carriage and an arrangement of mandrels mounted thereon, configured to hold objects to be printed on and translate and rotate them over the conveyor system;
**Fig. 18** schematically illustrates a carriage loaded with a plurality of objects to be printed entering a printing zone of the system;
**Fig. 19** schematically illustrates simultaneous printing on a plurality of objects attached to three different carriages traversing the printing zone;

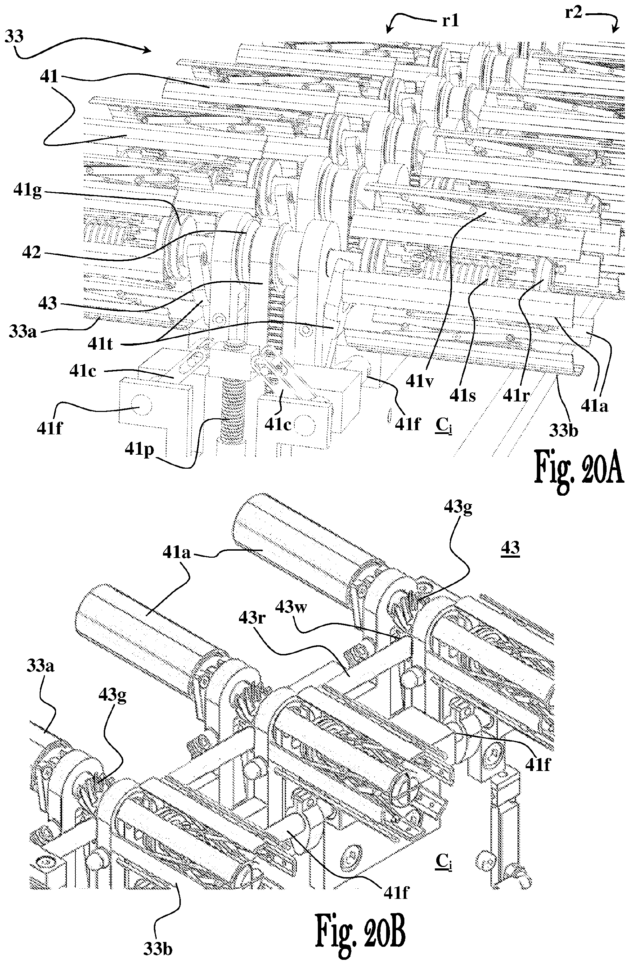

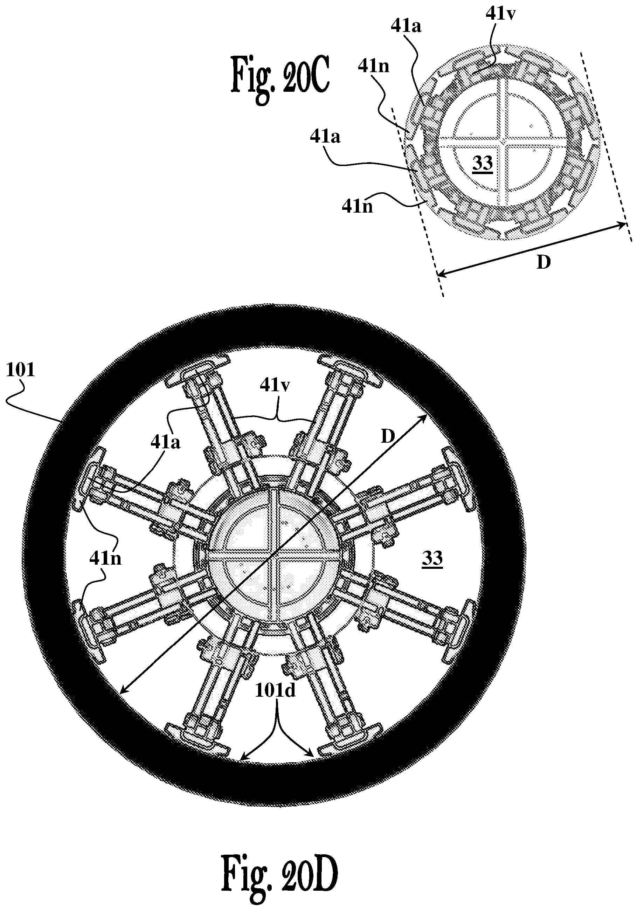

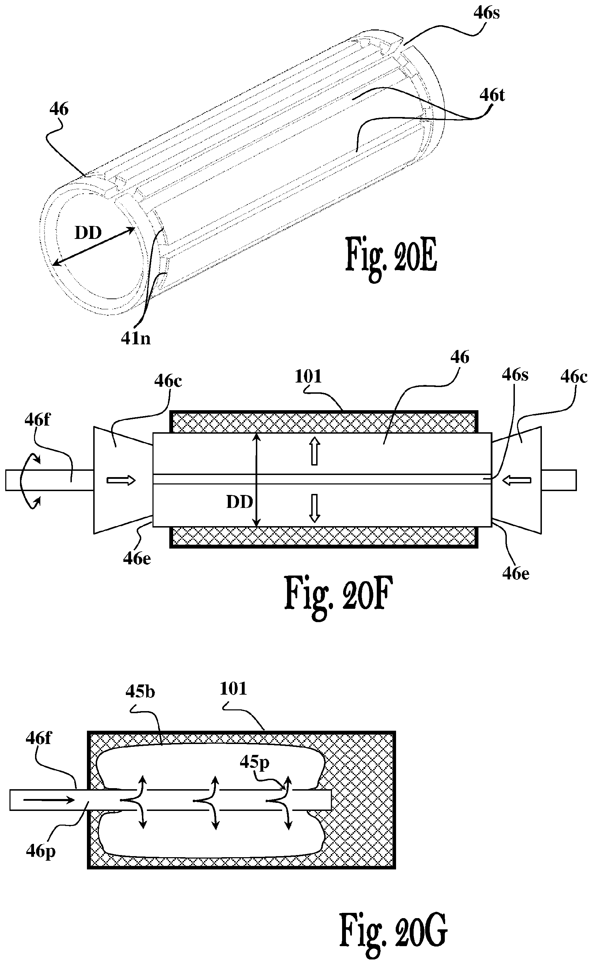

**Figs. 20A** to 20D schematically illustrate object gripping arrangements according to some possible embodiments, wherein **Fig. 20A** demonstrates a mandrel implementation employing a belt to rotate the mandrels, **Fig. 20B** demonstrates a mandrel arrangement implementation employing helical gears to rotate the mandrels, **Figs. 20C** and **20D** show a mandrel in a closed and deployed states, respectively, **Figs. 20E** and **20F** demonstrate use of a conical expansion mechanism, which is not covered by the claims, for object gripping, and **Fig. 20G** demonstrates use of an inflatable mechanism, which is not covered by the claims, for object gripping;
**Figs. 21A** to **21C** schematically illustrate possible control schemes usable in some possible embodiments; and
**Figs. 22A** and **22C** schematically illustrate inspection scheme according to some embodiments, wherein **Fig. 22A** demonstrate use of a single imager for scanning outer surfaces of the objects by acquiring a plurality of small images along circumferential strips, **Fig. 22B** demonstrates use of an elongated imager for scanning the outer surface of the objects by acquiring a plurality of elongated images along the circumference of the object, and **Fig. 22C** is a flowchart exemplifying a possible object inspection process.

### DETAILED DESCRIPTION OF EMBODIMENTS

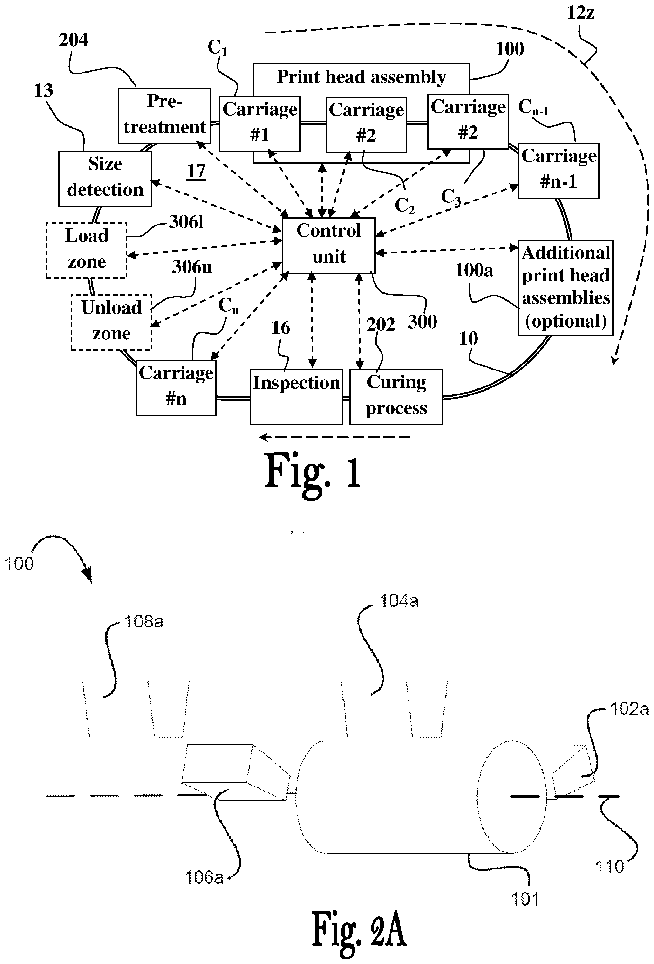

The various embodiments of the present invention are described below with reference to **Figs. 1** and 14 through 20D of the drawings, which are to be considered in all aspects as illustrative only and not restrictive in any manner. Elements illustrated in the drawings are not necessarily to scale, emphasis instead being placed upon clearly illustrating the principles of the invention. This invention may be provided in other specific forms and embodiments without departing from the essential characteristics described herein.

**Fig. 1** schematically illustrates a printing system **17** according to some possible embodiments employing a closed loop lane **10** (e.g., elliptical track) to translate objects to be printed on (not shown) therealong towards a printing zone **12z** provided in the lane **10** and comprising one or more printing head assemblies **100** (e.g., comprising printing heads of various colors). The printing system **17** in this non-limiting example comprises a loading zone **306l** configured for automatic loading of a plurality of objects to be printed on, from a production line. The loading zone **306l** may comprise a loading unit employing an independent controller and one or more sensors, motors mechanics and pneumatics elements, and being configured to communicate measured sensor data with a control unit **300** of the printing system **17** for timing, monitoring and managing the loading process. In some embodiments, the loading unit is configured to load a stream of objects to the system's lane at the same accurate index (used for marking printing start point on the surface of the object e.g., in cases in which the object has a previous mark or cap orientation).

In some embodiments the loaded objects are attached to a plurality of carriages **C₁**, **C₂**, **C₃**,...,**Cₙ₋₁**, **Cₙ** (also referred to herein as support platforms or as carriages **Cᵢ**) configured for successive movement over the lane **10** and for communicating data with the control unit **300** regarding operational state of the carriages **Cᵢ** (e.g., speed, position, errors etc.). As described hereinbelow in detail, the carriages **Cᵢ** may be configured to simultaneously, or intermittently, or in an independently controlled manner, move the carriages **C;** along the lane **10**, and to simultaneously, or intermittently, or in an independently controlled manner, to move and rotate the object attached to them (e.g., using rotatable mandrels, not shown in fig1) while being treated in a pre-treatment unit **204** (also referred to herein as a priming station) and/or being treated/coated/primed prior, during or after, printing on in the printing zone **12z**.

A size detection unit **13** may be used in the lane **10** to determine sizes (geometrical dimensions and shapes) of the objects received at the loading zone **3061** and to communicate size data to the control unit **300**. The size data received from the size detection unit **13** is processed and analyzed by the control unit **300** and used by it to adjust positions of print head units of the print head assembly **100** and alert on any possible collision scenarios.

A pre-treatment unit **204** may be also provided in the lane **10** to apply a pre-treatment process to the surfaces of the objects moved along the lane **10** (e.g., plasma, corona and/or flame treatment to improve adhesion of the ink to the container and create uniformity of the surface to the introduced printing/coating). Accordingly, control unit **300** may be configured to adjust operation of the pre-treatment unit **204** according to size data received from the size detection unit **13**. As exemplified in **Fig. 1** the print head assembly **100** may be configured to accommodate a plurality of carriages Cᵢ (in this example three carriages **C₁**, **C₂** and **C₃** are shown) and simultaneously print on surfaces of the objects attached to each one of the carriages.

Objects exiting the printing zone **12z** may be moved along a portion of the lane **10** comprising a curing unit **202.** The curing unit **202** may be operated by the control unit **300** and configured to finalize the printing process by curing the one or more layer of compositions applied to their surfaces (e.g., employing an ultra-violet/UV ink curing process or any other fixing or drying process such as IR, Electronic beam, chemical reaction, and suchlike). A vision inspection unit **16** may be further used to collect data (e.g., image data) indicative of the colors, patterns (e.g., print registration, diagnostics, missing nozzles, image completeness) applied to the objects exiting the printing zone **12z** and/or the curing unit **202.** After the printing, and optionally curing and/or inspection, process is completed the objects may be advanced over the lane **10** towards an unloading zone **306u** for automatic removal thereof from the printing system **17**. The unloading zone **306u** may include an unloading unit employing an independent controller and one or more sensor units, motors, mechanics and pneumatics elements, and being configured to communicate sensor data with the control unit **300** of the printing system **17** for monitoring and managing the unloading process.

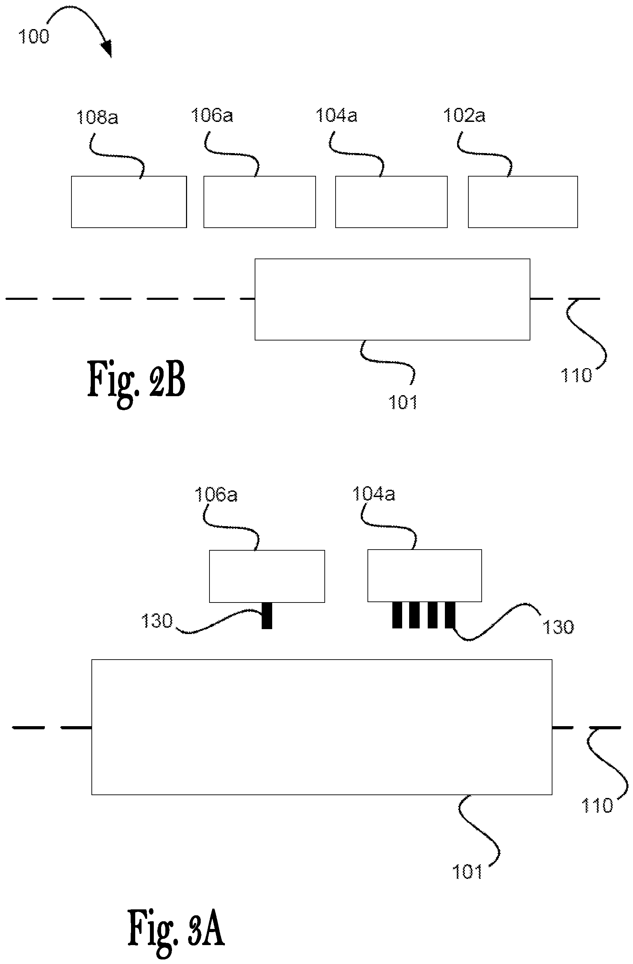

**Figs. 2A** and **2B** are schematic drawings illustrating different configurations of a print head assembly **100** of the present disclosure, which includes a plurality of print head units located at successive positions along an axis of translation.

In the configuration of **Fig. 2A**, the print head units **102a**, **104a**, **106a**, **108a** are arranged such that projections of different print head units on the axis of translation fall on different portions of the axis of translation **110** (along the printing axis), and are set at respective (angular) locations around the axis of translation **100**. In the configuration of **Fig. 2B**, the print head units **102a**, **104a**, **106a**, **108a** are arranged such that projections of different print head units on the axis of translations fall on different portions of the axis of translation **110**, and are positioned at the same (angular) locations around the axis of translation **110**, to form a line of print head units substantially parallel to the axis of translation **110**.

In this non-limiting configuration the axis of translation **110** generally corresponds to an axis of the object **101**, and is the axis along which a respective translation between the object **101** and the print head assembly **100** may occur. Moreover, a relative rotation between the object **101** and the print head assembly **100** may occur around the axis of translation **100**. The details of the translational and rotational motions will be discussed later hereinbelow.

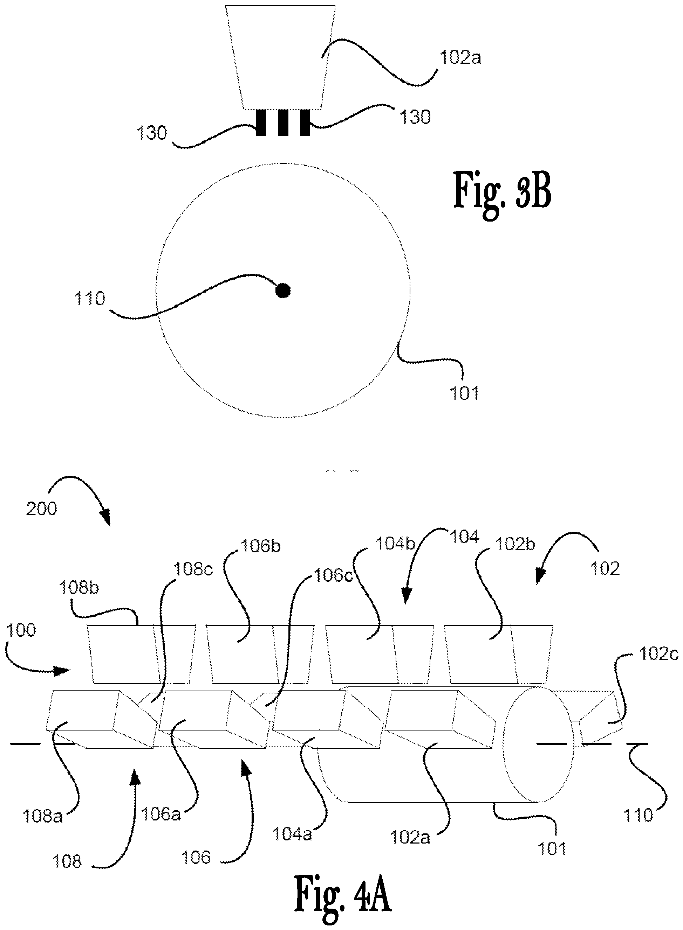

Referring now to **Figs. 3A** and **3B**, schematically illustrating possible arrangements of printing elements **130** (e.g., nozzles or ejection apertures) on single print head units, according to some possible configurations.

As shown in Figs, **3A****/B**, a print head unit may include one or more nozzles or ejection apertures (generally **130**) configured for enabling ejection of material compositions onto the surface of the object **101**. The material compositions may be fluids (as is the case in inkjet printing, and plastic jetting or/and printing) and/or solids (e.g., powders, as is the case in laser printing). The term printing is herein meant to include any type of ejection of a material onto a surface of an object, and/or engraving or marking dots, lines or patterns thereon. Thus printing includes, for example, changing the color, the shape, or the texture of an object, by ejecting a material on the object's surface, engraving and/or applying marks thereon. For example, and without being limiting, the printing head units may comprise one or more markers (e.g., engraving tool, laser marker, paint marker, and suchlike) configured to apply visible and/or invisible (i.e., functional, such as electronic charges) markings on the external surfaces of the objects traversing the printing zone **12z**.

**Fig. 3A** exemplifies different configurations of printing elements **130** of the print head units **104a** and **106a**. The print head units **104a** and **106a** are shown from a side thereof parallel to the translation axis. The print head unit **104a** includes a plurality of printing elements **130** (e.g., four), set along a row at successive locations along the axis of translation. The print head unit **106a** in this configuration includes a single printing element **130**, as commonly used in the art for jetting plastic compositions.

**Fig. 3B** shows a possible configuration of the printing elements provided in the print head unit **102a**. **Fig. 3B** shows a front view of the print head unit **102a** (perpendicular to the translation axis **110**). In this configuration the print head unit **102a** includes a column of printing elements **130** set in a line perpendicular to the translation axis **110**. Optionally, not all of the printing elements **130** are perpendicular to the object's surface. In the configuration of **Fig. 3B**, the printing element is perpendicular to the object's surface, e.g., is configured for ejecting a material composition along an ejection path perpendicular to the object's surface. On the other hand, the outer printing elements located on the sides of the central printing element are oblique to the object's surface.

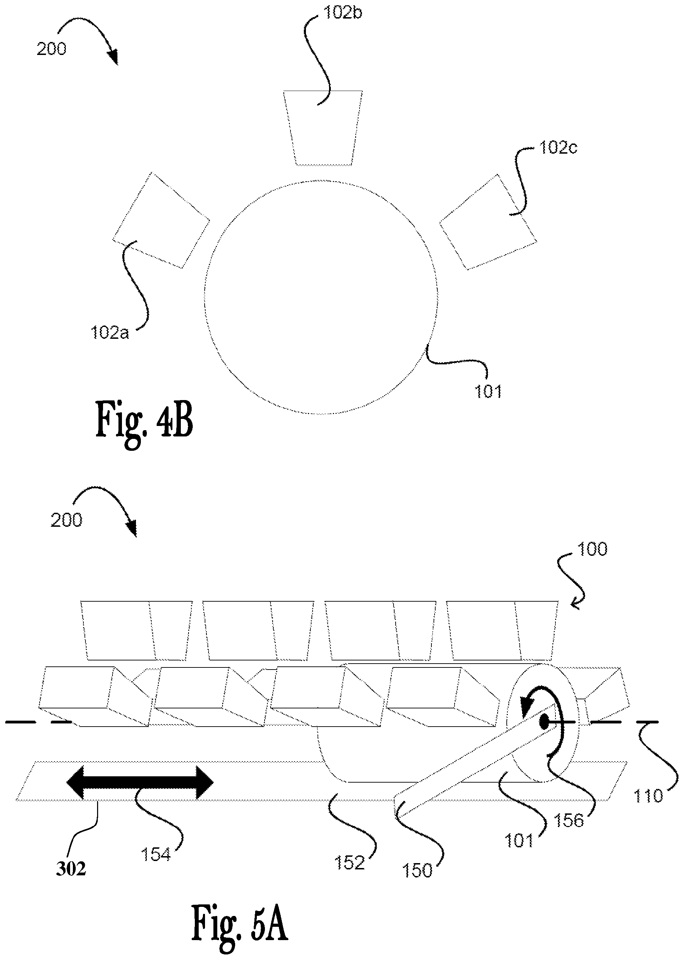

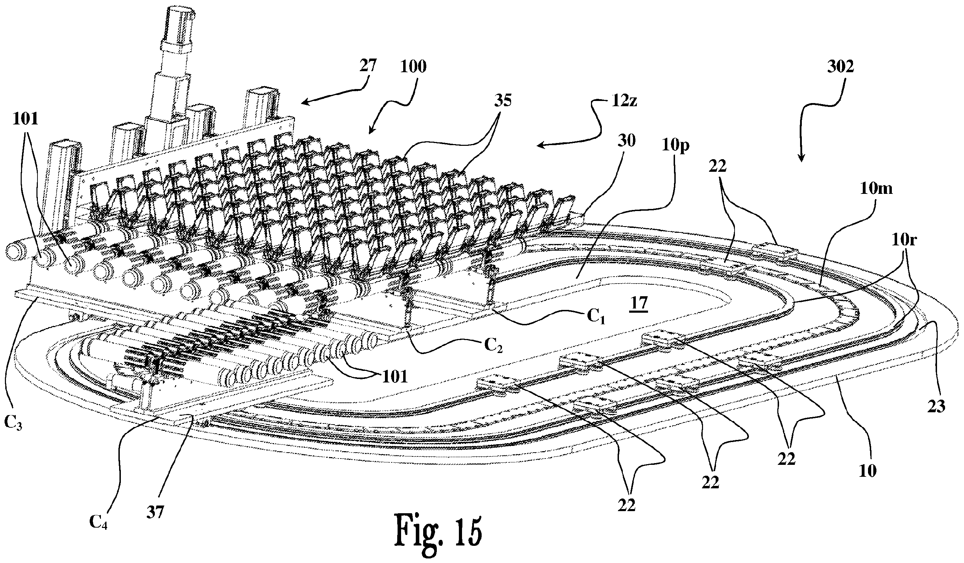

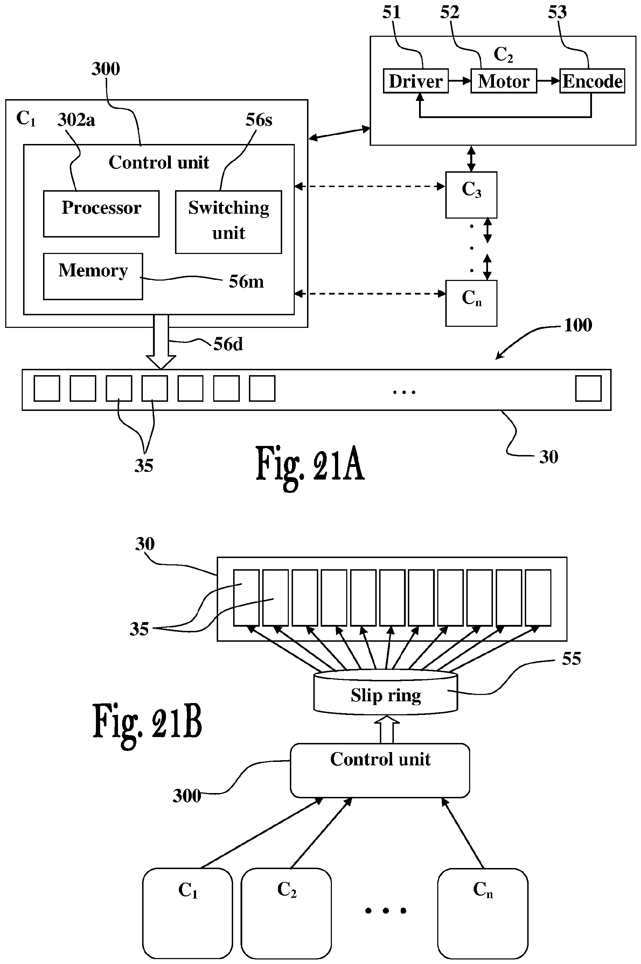

Optionally, a print head unit used in the present configuration can include a plurality of rows or columns of printing elements forming a two dimensional array defining a surface of the print head assembly facing the object. The print head assembly may be configured in any shape, such as, but not limited to, rectangular, parallelogram, or the like. Referring now to **Figs. 4A** and **4B**, schematically illustrating different views of a printing system **200** of the present disclosure. In **Fig. 4A**, a perspective view is shown, while in **Fig. 4B**, a front view is shown. The printing system **200** is configured for printing an image/pattern on a curved outer surface of the object **101**, and includes a print head assembly **100** having a plurality of print head units, and a conveyor system (**302** in **Figs. 5A** and **15**) configured for moving the object **101** and/or the print head units. Optionally, the system **200** includes a control unit (**300**, shown in **Figs. 1** and **21A**) configured for controlling the conveyor system **302** and the operation of the print head units. The curved surface of the object may be circular, oval, elliptical, etc.

In some configurations, each print head unit includes one or more printing elements e.g., configured for jetting/applying a material composition (such as ink, powder, curing fluid, fixation fluid, pretreatment fluid, coating fluid, and/or a composition of one or more fluids to create a third fluid, and/or any solid/gas material that, while jetted, is a fluid) onto the outer surface of the object **101**, as described above. The print head assembly **100** may be designed as the print head assemblies described in **Figs. 2A** and **2B**, or as a print head assembly **100** in which the print head units are organized in groups, as will be now described.

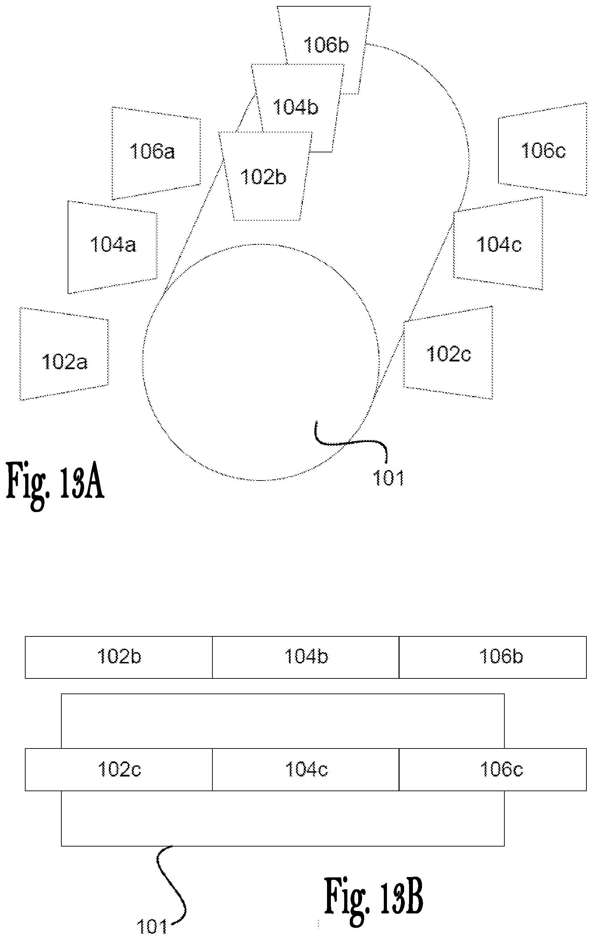

In the configuration shown in **Figs. 4A** and **4B**, the print head units of each group are arranged along a curved path around the axis of translation, and each group surrounds a respective region of the axis of translation **110**. Thus, the print head units **102a**, **102b**, and **102c** belong to a first group **102**. The print head units **104a**, **104b**, and **104c** (seen in **Fig. 13**) belong to a second group **104**. The print head units **106a**, **106b**, and **106c** belong to a third group **106**. The print head units **108a**, **108b**, and **108c** belong to a fourth group **108**. The groups **102**, **104** and **106** are located at respective locations along the axis of translation.

The conveyor system **302** is configured to move the object **101** and/or the print head assembly **100** such that a desired portion of the object **101** is brought to the vicinity of a desired print head unit at a desired time. In this manner, printing can be performed on the object's outer surface. The conveyor is configured for enabling at least two kinds of relative motion between the object **101** and the print head assembly: (i) a translational motion along or parallel to the axis of translation **110**, and (ii) a rotation about the axis of translation **110**. In this manner, any point on the outer surface of the object **101** can be brought to the vicinity of any print head unit. Optionally, a third kind of relative motion exists along one or more radial (or planar) axes substantially perpendicular to the axis of translation. This third motion may be necessary, in order to maintain a desired distance between at least one print head unit and the object's surface.

In some embodiments the control unit (**300**) is an electronic unit configured to transmit, or transfer from a motion encoder of the carriage, one or more signals to the print head units in the assembly **100** and to the conveyor system **302**. Alternatively, the signals from the motion encoder are transferred directly to the print head assembly wherein they are translated by each print head unit into printing instructions based on signals received from the control unit **300.** Accordingly, the positional control signal(s) transmitted from one of the carriage's encoders to the print head assembly **100**, may be used by the control unit (**300**) to instruct individual print head units to eject their respective material compositions from one or more printing elements (e.g., nozzles/ejection apertures) at specific times. The control unit **300** further generated control signal(s) to the conveyor system **302**, to instruct the conveyor system **302** to move (i.e., translate and/or rotate) the objects **101** and/or the print head assembly **100** according to a desired pattern. The control unit **300** therefore synchronizes the operation of the print head units with the relative motion between the object **101** and the print head assembly **100**, in order to create a desired printing pattern on the object and therefore print a desired image on the object's outer surface.

The groups of print head units are set along the translation axis **110**, such that during the relative motion between the object **101** and the print head assembly **100**, the object **101** is successively brought in the vicinity of different print head units or groups of print head units. Moreover, during at least certain stages of this motion, different portions of the objects **101** may be located in the vicinity of print head units belonging to at least two consecutive groups or print head units located at successive positions along the axis of translation **110**. In this manner, the object's outer surface may be printed upon simultaneously by print head units belonging to different groups or print head units located at successive positions along the axis of translation **110**. Optionally, different printing elements of a single printing unit may print on two different objects at the same time. As explained above, this feature enables the system **200** to perform printing on one or more objects while optimizing the utilization of print heads, thereby achieving a high efficiency system capable of providing high objects throughput. As exemplified in **Fig. 4A**, during a certain time period, the object **101** is in the vicinity of the first group (which includes print head units **102a**, **102b**, and **102c**) and the second group (which includes print head units **104a**, **104b**, and **104c**).

Besides enhancing the printing throughput on one or more objects, the structure of the system **200** also enables simultaneous printing on a plurality of objects **101**. For this purpose, the objects **101** are fed into the system **200** one after the other, and the conveyor system **302** moves (i.e., translates and/or rotates) the objects **101** and/or the assembly **100** of print head units, so that each object **101** can be printed upon by certain portions of the print head units which are not printing on another object. For example, in **Fig. 4A**, the object **101** is in the vicinity of the first and second group (though in practice, an object can be printed upon by more than two groups if the object is long enough compared to the print heads and to the distances between print heads along the axis of translation). If no other object is present, the print head units of the third group **(106a, 106b,** and **106c**) and the print head units of the fourth group (**108a**, **108b**, and **108c)** are idle. However, if a second object is introduced into the system **200** and moved to the vicinity of the printing heads of the first and/or second group, the first object will be moved to the vicinity of the second and/or third groups. In this manner, at least some of latter (second and third) groups of the printing heads will be able to print an image on the first object and the former (first and second) groups of the print head units will be able to print an image on the second object.

The printing system is considered fully utilized when under all the print heads units there are objects that are being printed on by the print heads units. To this end, any gap between the objects in the printing zone is considered as decreasing the efficiency, and therefore it is required that gaps between objects be minimized.

As can be seen in **Fig. 4B**, the print head units of each group are set around the translation axis **110**, so as to maintain a desired distance from the object's outer surface. The print head units may be set in a spaced apart arrangement, or may be adjacent to each other. The distances between consecutive print head units belonging to the same group may be equal to each other or different to each other. Moreover, within a group, the print head units may be set around the object's outer surface, such that the distances between the different print head units and the object's outer surface are equal to each other, or such that each print head unit has a respective distance from the object's outer surface. The distance between the print head units and the object's outer surface depends on the type of print head units used and composition, and is chosen so that the print head units deliver their compositions in a desired fashion. It should be noticed that the composition jetted by the print head units may be a chemical material, a chemical compound of materials and/or a mixture between materials and/or compounds.

In some configurations of the present disclosure, the printing on the object's surface by different print head units or by different printing elements **130** of a print head unit may be performed for the purpose of creating a new path that was not printed beforehand. Optionally, some of the printing may be performed along or near an existing printed path. A path printed near or between two other paths may be used to achieve a predefined resolution. A path printed along an existing path may be used to complete the resolution of the existing path by adding more dots to create a denser spiral path. Moreover, printing a path along an existing path may be used to create redundancy between two different printing elements, i.e., if one printing element is not working then the second printing element prints a portion (e.g., 50%) of the desired data. Optionally, in case one of the printing element stops operating, the system can be controlled so as to enable the second printing element to print the data that was originally intended to be printed by the first printing element. This may be done, for example, by controlling (e.g., slowing) down the motion (translation and/or rotation) of the object **101** and/or print head array, or by controlling the second printing element to jet more ink. Optionally, the print head units belonging to the same group are configured for jetting ink of a single color to the object's surface, and the different groups of print head units are configured for jetting respective colors to the object's surface. Alternatively, different print head units belonging to the same group are configured for jetting ink of different colors.

It should be noted that although in the above-mentioned figures each group is shown to include three print head units, the groups may have any number of printing units, for example, one, two, four, etc. Moreover, though the above-mentioned figures show the presence of four groups, any number of groups may be included in the system of the present invention. Additionally, the print head units in the above-mentioned figures are shown to be shorter than the length of the object **101**. This may not be the case, as in some cases, the print head units may be as long as the object, or even longer.

The system **200** can be used to print on the object **101** according to two different printing sequences: continuous printing and step printing or any combination thereof. In continuous printing, the printing occurs during the relative motion between the object **101** and the print head arrangement **100**, when such motion includes simultaneous translational motion along or parallel to the axis of translation **110** and a rotational motion around the axis of translation **110**. In this kind of printing, image data is printed on the object's surface along a substantially spiral path.

In step printing, a relative translation between the object and the print heads brings desired regions of the object's surface to the vicinity of one or more print head groups or print head units located at successive positions along the axis of translation. The translation is stopped, while the relative rotation is effected. During the rotation, the print head units perform circumferential printing on the object's surface. After the printing is performed, the relative translation re-starts to bring one or more additional desired regions of the object's surface to the vicinity of one or more print head groups. The rotation may be maintained during the translation, or be discontinued at least during part of the translation.

The steps may be small steps, where translation occurs for moving a desired region of the object **101** from one printing element **130** to a consecutive printing element **130** of a single print head unit, or may be larger steps, where translation occurs for moving a desired region of the object from a first print head unit to a successive print head unit (e.g., belonging to a different group) along the axis of translation **110**. In some configurations, the steps may be large enough to translate a desired region of the object **101** from a first print head unit to a second print head unit while skipping one or more intermediate print head units.

In step printing, the circumferential printing may be activated by a trigger which confirms that the desired region of the object **101** has been translated by a desired distance. This trigger may be a positioning encoder signal and/or an index signal, which is active during translation and non active when no translation occurs. Knowing the speed of translation and the position (along the axis of translation) of the desired print head units and its printing elements **130**, the time point at which the desired region of the object **101** is exposed to the desired print head unit, and its printing element **130** can be calculated. Thus, when the trigger is activated by the positioning encoder and/or index signal, an instruction to effect printing is sent to the desired print head unit, and/or printing element **130** for example, according to the encoder position signals. Alternatively, the trigger may be activated by a light detector located on one side of the object **101** and corresponding light emitters located on a second side of the object **101**. When the object **101** obscures the light detector, and the light from the light emitter does not reach the light detector, it is deemed that the desired region of the object's surface has been translated by the desired amount.

Optionally, a circumferential coordinate of a certain region of the object's surface is monitored (e.g., calculated via a known speed of rotation and the known radius of the object), and a second trigger is activated when the region reaches a desired circumferential coordinate which corresponds to the circumferential coordinate of desired print head unit, or printing element **130**. In a variant, after translation is stopped, the relative rotation is performed to expose the desired region on the object's surface to the desired print head unit, or printing element **130**, and only then printing (ejection of the material composition) is effected. In another variant, the second trigger is not used, and when translation ceases, the desired region of the object's surface is exposed to a different print head unit, or printing element **130**. Because the circumferential coordinate of desired region is known, the control unit can instruct the different print head unit or printing element **130**, to affect a desired printing onto the desired region. This last variant is useful for decreasing delays in the object's printing. A possible printing pattern may include both continuous printing and step printing, performed at different times.

It should be noted that the axis of translation **110** is shown in the figures as a straight line. This may not necessarily be the case. In fact, the axis of translation may be curvilinear, or may have straight sections and curvilinear sections.

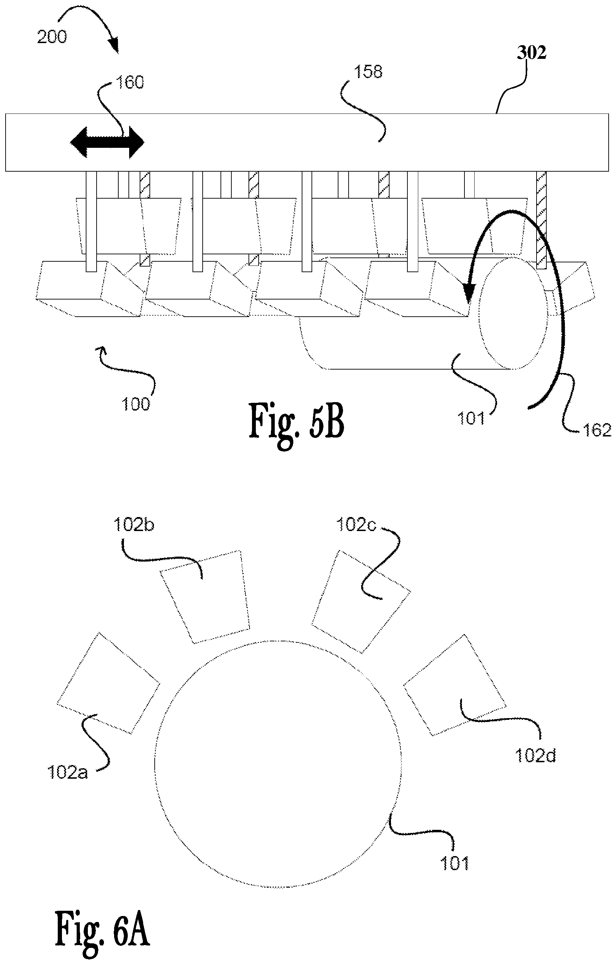

Referring now to **Figs. 5A** and **5B**, which exemplify a conveyor system **302** included in the printing system in some embodiments. In the configuration illustrated in **Fig. 5A** the conveyor system **302** is configured to move the object **101**, while in **Fig. 5B** the conveyor system **302** is configured to move the assembly of print heads **100**.

In the configuration shown in **Fig. 5A**, the conveyor system **302** of the system **200** includes an object holder **150** joined to an end of the object **101**. In a variant, the object holder moves the object **101** along the translation axis **110**, and rotates the object around the translation axis **110**. The translation and rotation may or may not be simultaneous, depending on the desired manner of printing. Optionally, the conveyor system **302** includes a conveyor belt **152**, which is configured to move the object **101** along the translation axis **110** (as shown by the double arrow **154**), while the object holder's function is limited to rotating the object **101** (as shown by the arrow **156**).

The conveyor belt **152** may be a belt that is moved by a motion system, such as an electrical motor, linear motor system, multiple linear motor systems that combine to form a route, a magnetic linear system, or an air pressure flow system. In case a plurality of objects is handled, each of the objects may be handled separately by one or more object holders. It may be the case that at different places along the translation axis **110** each of the objects **101** is controlled to translate in a different manner (e.g., at a different speed) along the translation axis **110**.

In the configuration shown in **Fig. 5B**, the conveyor system **302** of the system **200** includes a carriage **158**. The carriage **158** in this example carries the print head assembly **100** along a direction parallel to the translation axis **110** (as shown by the double arrow **160**) and rotates with the print head units around the translation axis (as shown by the arrow **162**).

It should be added that, although not illustrated in the figures, other scenarios are also possible for giving rise to the relative translational and rotational motion between the object and the print head arrangement. In a first possible scenario, the conveyor system **302** is designed for moving the print head assembly **100** along the axis of translation **110** and includes an object holder for rotating the object around the axis of translation **110.** In a second possible scenario, the conveyor system **302** is designed for moving the object **101** along the axis of translation **110** and for rotating the print head arrangement around the axis of translation **110.**

In some configurations both the object **101** and the print head arrangements **100** may be moved.

All the above-described manners of relative motion (fixed print head units and moving object, moving print head units and fixed object, translating the object and rotating the print head arrangement, rotating the object and translating the print head arrangement, moving print head units and moving object) are within the the present configuration and equivalent to each other. In order to simplify the description of the configuration, in the remaining part of this document the description will relate to the case in which the print head units are fixed and the object **101** is moved (translated and rotated). However, references to the motion of the object **101** should be understood as references to the relative motion between the object **101** and the print head unit arrangements **100**.

In both of the cases described above, individual print head units and/or individual groups may be movable along the translation axis **110** with respect to each other. This may be used for manual and/or automatic calibration prior and/or post printing. Optionally, individual print head units and/or groups may be movable around or perpendicularly to the translation axis **110**. This may also be used for manual and/or automatic calibration prior and/or post printing.

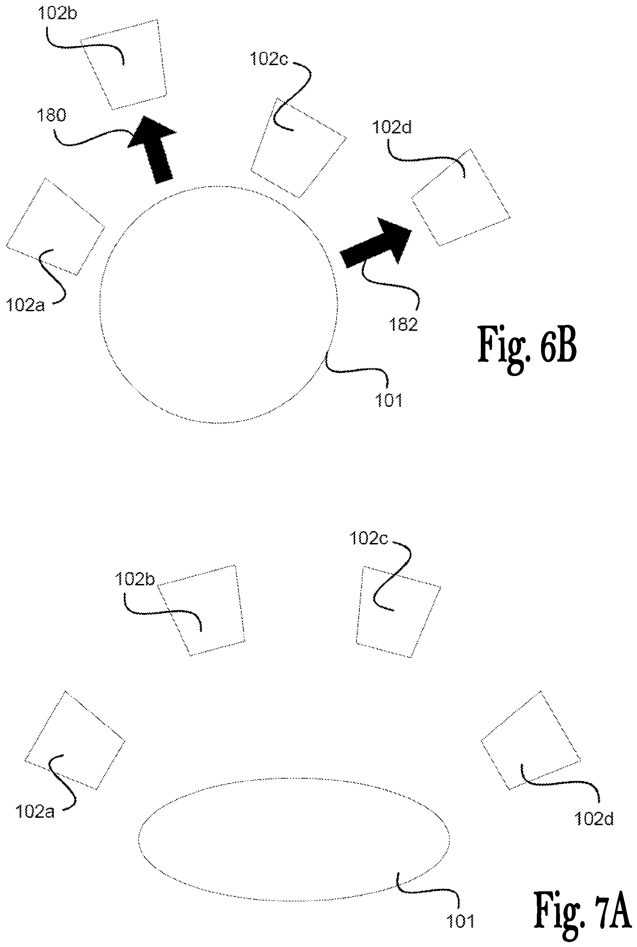

Referring now to **Figs. 6A** and **6B**, which are schematic drawings illustrating some possible configurations in which the individual print head units are controllably movable.

In **Fig. 6A**, the print head units **102a-102d** belong to a single group and are set along the circumference of the object **101**. In **Fig. 6B**, the print head units **102b** and **102d** are moved away from the translation axis (or from the object **101**), as depicted by the arrows **180** and **182**, respectively. In some configurations of the present disclosure, at least some print head units can be individually moved toward and away from the object **101**. Optionally such motion for each print head unit occurs along a respective axis which is perpendicular to the translation axis. Optionally, the orientation of individual print head units can be adjusted as well.

The ability to move the print head units enables maintaining a desired distance between the print head units and the object **101**. Also, the moving of the print head units enables moving the selected print head units between their active positions and their passive positions. This gives flexibility to the print head assembly, as it can be configured in different manners to print on surfaces of different diameters and lengths (e.g., for object of small diameters, the number of active print head units in a group is decreased, to enable the active print heads to be at a desired distance from the object's outer surface). In a variant, the print head units can be moved only prior to the printing, i.e., after the object starts to move the print head units maintain their position with respect to the axis of translation. This feature is advantageous, as it enables the system **200** to keep a desired distance between the print head units and objects having a plurality of diameters and lengths. In another variant, the print head units can be moved during the printing. The latter feature may be advantageous in the instance in which thecross-sectional size and/or shape of the object varies along the length of the object, or inthe cases where the object is not circular (as exemplified in Figs. 7A to 7C).

Referring now to Figs. 7A to 7C, showing configurations in which the print head units are controllably movable to fit a shape of the object **101**, before and during rotation of the object **101**.

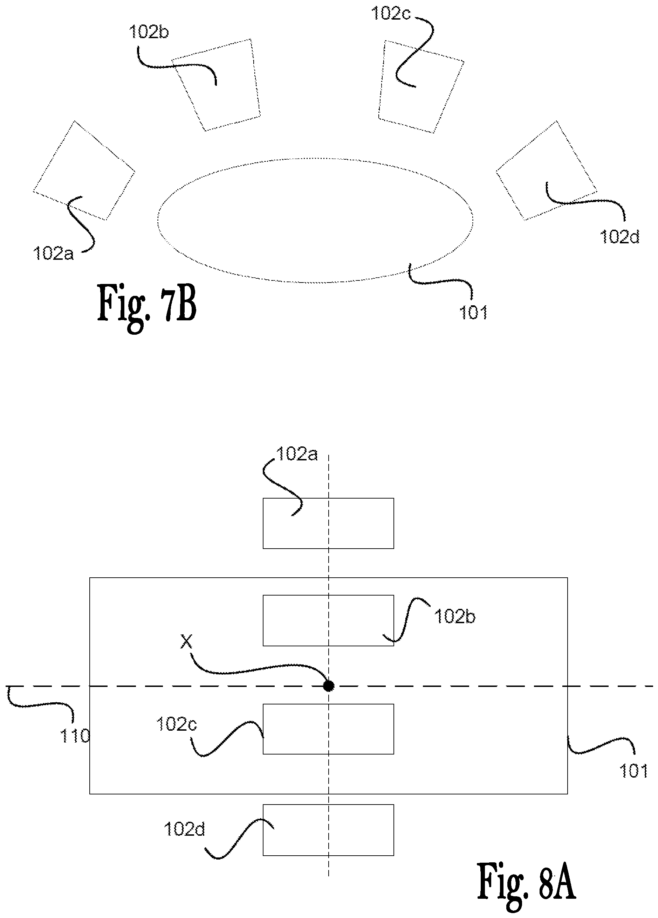

In **Fig. 7A**, an object **101** having an elliptical cross section is brought to the system **100**. The print head units **102a-102d** belong to a single group and are initially set to match the shape of a circular object. In **Fig. 7B**, the print head units **102b** and **102c** are moved toward the translation axis (located at the center of the elliptical cross section on the object **101** and moving out of the page), so that a desired distance is maintained between the objects' outer surface and each print head unit. The object **101** is rotated. During the rotation, the print head units **102a-102d** are moved with respect to the translation axis, and optionally their orientation is varied. At a certain time, the object **102** has rotated by 90 degrees (see Fig. 6c). The print head units **102a** and **102d** have been moved toward to the translation axis, while the print head units **102b** and **102c** have been moved away from the translation axis. In this manner, a desired distance between the print head units and the object's surface is maintained. Moreover, the orientation of all of the print head units has been changed, in order to maintain a desired orientation with respect to the regions of the object that are exposed to the print head units.

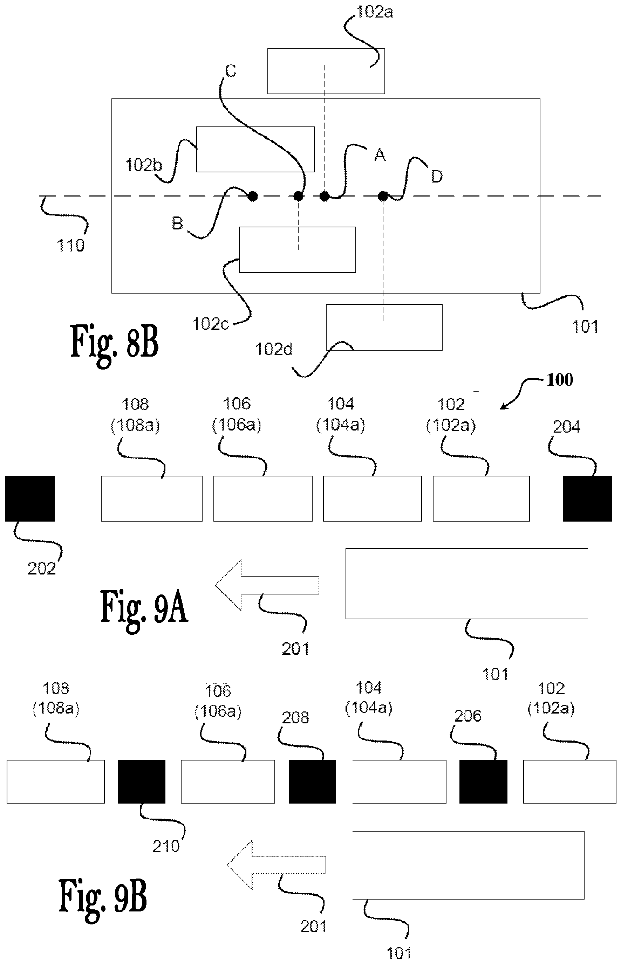

It should be noted that in the previous figures, print head units of the same group have been shown to be located at the same coordinate along the axis of translation **110.** However, this need not be the case. Referring now to **Figs. 8A** and **8B**, exemplifying two optional arrangements of print head units belonging to a group. In **Figs. 8A** a schematic drawing exemplifies some possible configurations in which the print head units belonging to the same group are positioned at the same location along the axis of translation **110.** **Fig. 8B** is a schematic drawing exemplifying some possible embodiments in which the print head units belonging to the same group are staggered i.e., being positioned at different locations along the axis of translation **110.**

In **Fig. 8A**, all the print head units belonging to the same group are positioned at a same location **X** along the axis of translation **110.** In other words, the projections of the different print head units of the same group on the translation axis **110** fall on the same region of the translation axis. In **Fig. 8B**, each print head unit of the same group is positioned at a respective location along the translation axis **110.** The print head unit **102a** is centered at coordinate **A** on the axis of translation **110.** The print head unit **102b** is centered at coordinate **B.** The print head unit **102c** is centered at coordinate C. The print head unit **102d** is centered at coordinate **D.** In other words, projections along the translation axis of at least two of the print head units of the at least one group fall on a different regions of the translation axis **110.**

Referring now to **Fig. 9A**, which exemplifies some configurations in which at least one curing/drying station is located at the end of the print unit assembly **100**, downstream of the last group of print head units.

In **Fig. 9A**, the object **101** is moved from right to left, in the direction **201.** During this translation, regions of the object's surface are successively exposed to the print head units of the groups **102**, **104**, **106**, and **108** (or to print head units **102a**, **104a**, **106a**, and **108a**, if the print head assembly **100** is set according to **Figs. 2A** and **2B**) and printed upon. The printing may be continuous printing or step printing, as described above. In some configurations of the present disclosure, a curing/drying station **202** is located downstream from the last group **108** (or the last print head unit **108a**). After receiving ink from the print head units, the object **101** is moved to the curing/drying station, where the ink is fixed on the object's surface. The curing/drying may be performed according to any known technique, such as: exposing the printed surface to ultraviolet (UV) light without or with any combination of gas or external liquid to enhance the curing/drying speed; exposing the printed surface to an electrical beam (EB); heating the surface via exposure to IR (infra red) radiation; ventilation drying. These techniques maybe used for curing/drying after the printing is performed.

Techniques may also be used for priming/pretreating the object's surface prior to printing: exposing the printed surface of the object to a flame, and/or plasma, and/or corona, and/or surface cleaning equipment: and/or antistatic equipment; surface heating or drying equipment; applying a primer or coating material to the surface; exposing the surface printed or unprinted to a gas, such as nitrogen or an inert to enhance later curing. To this end, optionally, a priming station **204** is located upstream from the first print head group **102** (or the first print head unit **102a**). In the priming station **204**, the surface of the object **101** is treated so as to enhance the imminent printing upon it. The priming may be performed according to any of the above-mentioned manners used for priming/pretreating.

It should be noticed that the curing/drying station may include a single curing/drying unit or a group of curing/drying units set around the translation axis **110**. Similarly, the priming station may include a single priming unit or a group of priming units set around the translation axis **110**.

Referring now to **Fig. 9B**, a schematic drawing exemplifying some configurations in which at least one curing/drying station and/or priming/pretreating station is located between two successive groups of print head units.

In some configurations, it may be desirable to have a curing or priming station after (downstream from) one or some of the groups of print head units (or after some of the print head units located at successive positions along the axis of translation). For example, and without being limiting, if consecutive groups or print head units apply to the object compositions that may mix together and yield undesirable results a curing station is needed between these two consecutive groups or print head units. In another configuration, certain print head units or the print head units of a certain groups are configured for jetting a composition which needs a certain kind of priming prior to application on the object's surface. In this case, a priming station needs to be placed before the certain print head units or certain groups.

In the configuration of **Fig. 9B**, a curing/drying and/or priming/pretreating station **206** is located between the groups **102** and **104** (or print head units **102a** and **104a**), a curing/drying and/or priming/pretreating station **208** is located between the groups **104** and **106** (or print head units **104a** and **106a**), and a curing/drying and/or priming/pretreating station **210** is located between the groups **106** and **108** (or print head units **106a** and **108a**).

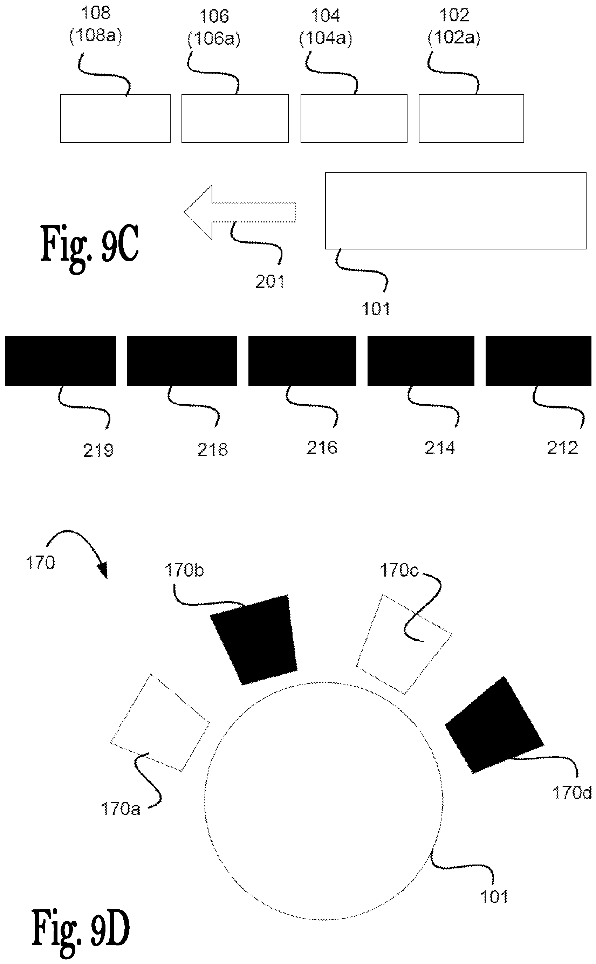

Referring now to **Fig. 9C**, a schematic drawing showing some configurations in which a plurality of curing/drying/priming/pretreating stations are positioned one after the other along the axis of translation. In this configuration, the curing/drying/priming/pre-treating stations **212, 214, 216, 218, 219** are located below the object **101**, while the print head groups (or the individual print head units) are located above the object **101.** In this manner, the printing and the curing/drying/priming/pretreating may be performed simultaneously. Optionally, the stations **212**, **214**, **216**, **218**, **219** may be part of a single long station having a plurality of printing elements. This is advantageous since it creates a curing/drying/priming/pretreating to each printed layer on each cycle.

Referring now to **Fig. 9D**, a schematic drawing showing some configurations in which at least one curing/drying and/or priming/pretreating unit is part of a group of print head units. In this configuration, the group **170** includes print head units **170a** and **170c** and curing/drying and/or priming/pretreating units **170b** and **170d.** This enables curing/drying and/or priming/pretreating to be performed before, between, or after printing by individual print head units.

It is that in some configurations shown in **Figs. 9A** to **9D** self-fixated inks may be advantageously used in the print head units **35**. Such self-fixated inks are typically configured to instantly fixate after injected from the printing elements of the print head upon reaching the surface of the object. Accordingly, such possible configurations employing self-fixated inks may utilize one curing zone at the end of the printing process. Furthermore, in such possible configurations wherein a single curing zone is employed at the end of the printing process allows designing printing head assemblies having shorter lengths and higher accuracies.

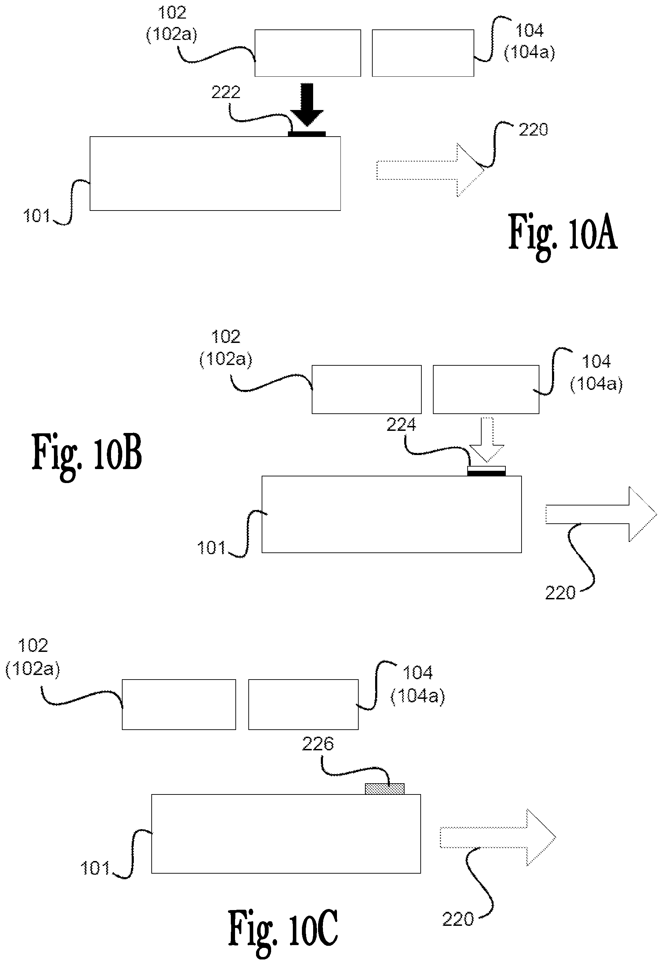

Referring now to **Figs. 10A** to **10C**, which are schematic drawings illustrating some possible configurations in which first and second compositions are jetted on the same location of the object's surface by print head units of first and second groups respectively (or by first and second print head units), in order to print the location with a third composition which is formed by a combination of the first and second compositions.

In **Fig. 10A**, the object **101** is moved in the direction **220** along the axis of translation so that a certain region of the object's surface is exposed to a print head unit of a first group **102** (or to a first print head unit **102a**, if the print head assembly is configured according to the examples of **Fig. 2A** or **2B**). The print head unit jets a first composition **222** on the region of the object's surface, according to an instruction from the control unit (**300**). In **Fig. 10B**, the object **101** is moved in the direction **220** by the conveyor system (**302**), so that the region of the object's surface is exposed to a print head unit of a second group **104** (or to a second print head unit **104a**). At this point, the control unit instructs the print head of the second group to jet a second composition **224** on the region which received the first composition. At **Fig. 9c**, the first and second compositions combine and yield a third composition **226**. The combination of the first and second compositions may be a mixing or a chemical reaction. The mixing may be mixing of ink of two different colors for generating a desired ink of a third color.

This setup is advantageous in the instance in which the third composition **226** cannot be printed by the desired printing system. For example, and without being limiting, if the third composition is a solid, the third composition cannon be ejected in inkjet printing. The first and second liquid compositions are to be combined during the printing process according to the techniques of **Figs. 10A** to **10C**, if they are to be delivered by print head units in liquid form to the target area. On the target area, the combination between the liquid compounds will occur to form the solid composition.

A solid composition is an extreme example. In fact, even a desired liquid composition having fluid viscosity above a certain threshold cannot be delivered by certain print head units (many inkjet print head units, for example, can jet liquids having viscosity between 10-15 centipoises). However if the component compositions of the desired composition have a viscosity that is below the operating threshold of the print head units, the component compositions can be delivered by successive print head units and mix on the target area to form the more viscous desired composition.

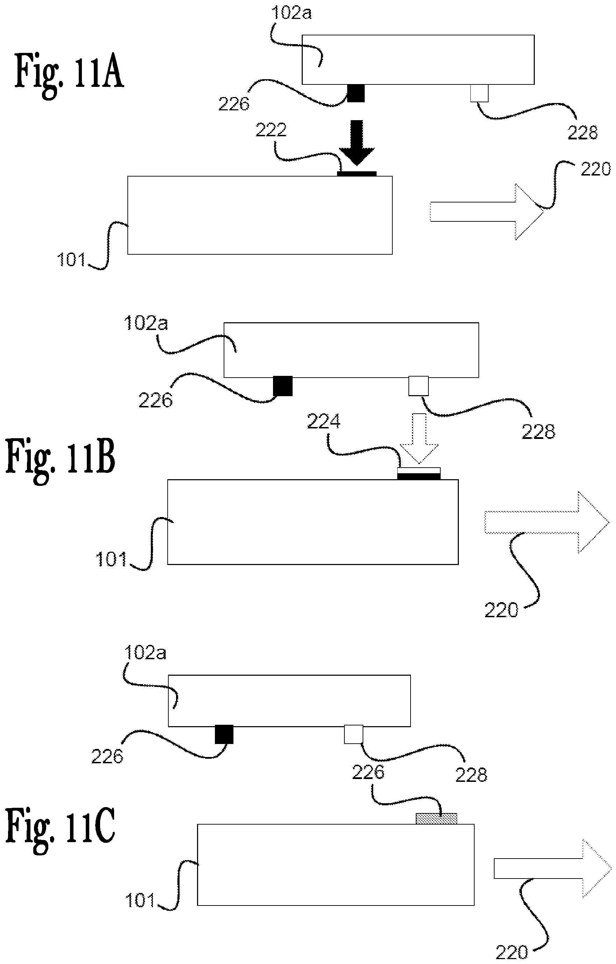

The combination of compositions described in Figs. **10A** to **10C** may be achieved by a single print head unit **102a** having at least two printing elements **226** and **228**, as depicted by **Figs. 11A** to **11C**. In this configuration, the first printing element **226** ejects the first composition **222** on a certain region of the surface of the object **101**, and the second printing element **228** ejects the second composition **224** on the certain region of the surface of the object **101.**

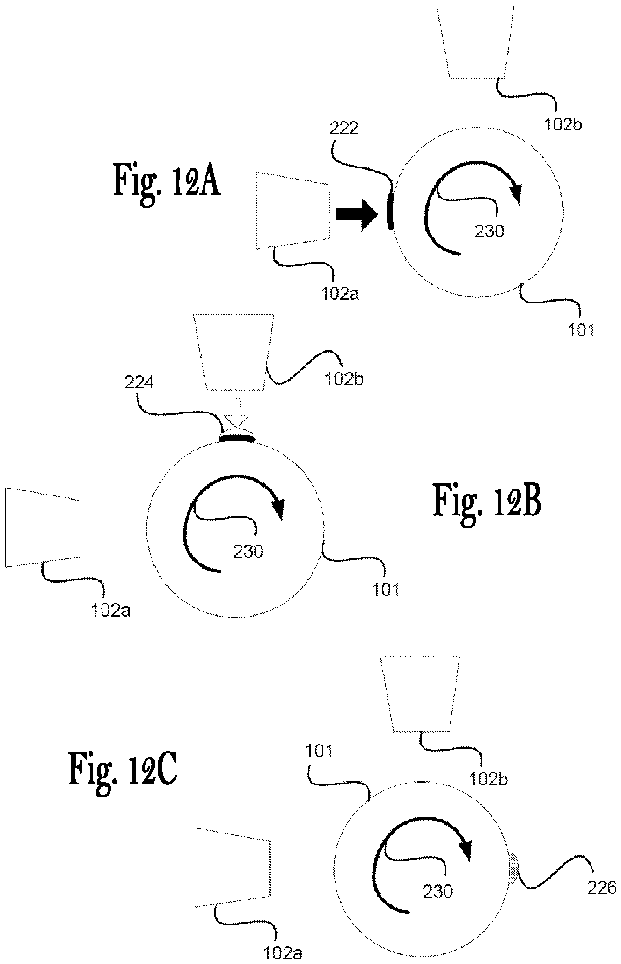

Referring now to **Figs. 12A** to **12C**, which are schematic drawings illustrating some possible configurations in which first and second compositions are jetted on the same location of the object's surface by respectively first and second printing units of the same group, in order to print the location with a third composition which is formed by a combination of the first and second compositions.

In **Fig. 12A**, a first print head unit **102a** jets a first composition **222** on a certain region of the object's surface, according to an instruction from the control unit (**300**), while the object rotates in the direction **230** around the axis of translation. In **Fig. 12B**, the object **101** is rotated in the direction **230**, and the region which received the first composition **222** is brought to the vicinity of a second print head unit **102b** belonging to the same group as the first print head unit **102a.** At this point, the control unit instructs the second print head unit **102b** to jet a second composition **224** upon the region which previously received the first composition **222**. In **Fig. 12c**, the first and second compositions combine together (e.g., by reacting chemically or mixing) and yield a third composition **226.** As above, this setup is advantageous in the instance in which the third composition **226** cannot be printed by the printing system.

It should be noted that though the examples of **Figs. 10A-10C**, 11A-11C, and **12A-12C** relate to printing a desired composition formed by two component compositions, the technique of **Figs. 10A-10C**, 11A-11C and **12A-12C**, can also be used for forming a desired composition by combining three or more component compositions.

Referring now to **Figs. 13A** and **13B**, which are schematic drawings showing configurations in which print units belonging to different groups are located at the same position around the axis of translation, and are organized in bars/columns. In **Fig. 13A** a perspective view of the print head assembly is shown. In **Fig. 13B**, a side view of the print head assembly is shown.

As explained above, the print head units **102a**, **102b**, and **102c** belong to a first group, the print head units **104a**, **104b**, and **104c** belong to a second group, and the print head units **106a**, **106b**, and **106c** belong to a third group. In the example of **Figs. 13A** and **13B**, the print head units **102a**, **104a**, and **106a** are located at a first angular coordinate around the axis of translation. Similarly, the printing head units **102b**, **104b**, and **106b** are located at a second angular coordinate around the axis of translation. Moreover, the printing head units **102c**, **104c**, and **106c** are located at a third angular coordinate around the axis of translation. The printing head units **102a**, **104a**, and **106a** form a column substantially parallel to the translation axis (as do the printing head units **102b**, **104b**, and **106b**, and the printing head units **102c**, **104c**, and **106c**).

In each column, the printing heads are joined to each other and form bars. The location of the print head units during printing is critical for achieving a successful printing. The print head units are to be aligned with each other along the translation axis at a high precision for high-resolution printing. Therefore, aligning the print head units with respect to each other is an important part of the printing process. The advantage of having the printing heads arranged in bars/columns lies in the fact that rather than adjusting a position of each printing head individually prior to printing, the positions of the bars/columns along the translation axis are adjusted. By adjusting the position of each bar/column, the position of a plurality of printing head units which constitute the bar/column is adjusted. Thus, once the position of the first bar/column is chosen, all the other bars/columns must simply be aligned with the first bar/column. This enables a precise and quick adjustment of the location of the printing heads prior to printing.

Though subsequent print head units of any bar of **Figs. 13A** and **13B** are shown to be joined to each other, this is not necessarily the case. In fact, a bar/column can include at least two subsequent print head units set so as to define an empty space therebetween.

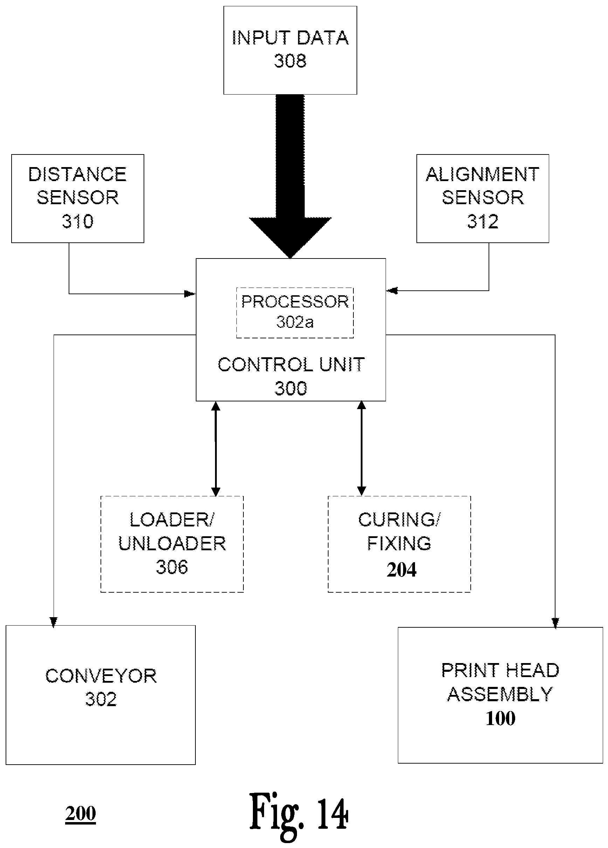

Referring now to **Fig. 14**, which is a block diagram illustrating an embodiment of the system **200** in which a control unit **300** controls the conveyor and print head assembly according to one or more kinds of input data.

The system **200** in this non-limiting example includes a control unit 300, a conveyor system **302**, and a print head assembly **100**, all of which have been described hereinabove. The print head assembly **100** may, or may not, include one or more priming (**204**) and/or curing (**202**) units or stations, as described hereinabove. Optionally, the system **200** includes a loader/unloader unit **306** configured for loading the object(s) onto the conveyor system **302** and unloading the object(s) from the conveyor system **302** once the printing (and optionally curing/drying and/or priming/pretreating) is completed. The control unit **300** operates the conveyor system **302**, the print head assembly **100**, and the loader/unloader device **306** (if present), to create a desired sequence of operations of these elements (printing pattern), in order to yield a printed image on the object (**101**).

Optionally, the sequence of operations is transmitted to the control unit **300** from an outer source as input data **308**. The outer source may be a computer, which computes a suitable sequence of operations based on properties (e.g., colors, size, etc.) of an image which is to be printed on the object. In a variant, the control unit **300** includes a processor **302a** configured for processing the image and determining the desired sequence of operations. In this case, the input data **308** is data indicative of the image to be printed, which the processor **302a** uses to determine the sequence of operations.

In a variant, the system **200** includes a distance sensor **310** and an alignment sensor **312**. The distance sensor **310** is configured for sensing the distance between at least one print head unit and the surface of the object. The alignment sensor **312** is configured for determining whether print head units (or bars/columns of such units, if present) are properly aligned with each other along the translation axis and/or around the translation axis.

The control unit **300** receives data from the distance sensor **310** and alignment sensor **312** in order to determine whether the print head units are in their proper positions, and determines whether or not to move them. In a variant, the control unit **300** instructs the print head units to move to their assigned positions before the printing starts (perpendicularly to the translation axis according to data from the distance sensor **310**, and/or along and/or around the translation axis according to data from the alignment sensor **312**). In another variant, the control unit **300** instructs the print head units to move to their assigned positions during the printing (for example, if the cross-sectional shape of the object varies along the object's length or the object's cross section is not circular, as explained above).

The distance sensor **310** and the alignment sensor **312** may operate by emitting radiation (e.g., electromagnetic, optical, acoustic) toward a target and receiving the radiation reflected/scattered by the target. A property of the received radiation (e.g., time period after emission, phase, intensity, etc.) is analyzed in order to determine the distance between the sensor and the target.

According to a first variant, a distance sensor element is mounted on at least one of the print head units and is configured for emitting radiation to and receiving radiation from the object. According to a second variant the distance sensor is an external element which determines the position of a print head unit and of the object's surface, and calculates the distance therebetween.

Similarly, in a variant, an element of the alignment sensor **312** is mounted on a print head unit and is configured for emitting radiation to and receiving radiation from another print head unit. In another variant, the alignment sensor **312** includes an external element configured for determining the position of two print head units (or bars/columns of such units) and calculating the distance therebetween.

In some embodiments of the present invention, the distance sensor and alignment sensor are not present, and a calibration process is required prior to printing. In the calibration process, the print head units of the assembly **100** are moved to their positions prior to printing, and a trial printing is performed. The image printed in the trial printing is analyzed either by a user or by a computer (e.g., an external computer or the control unit itself), and the positions of the print head units are adjusted accordingly, either manually or automatically. Once this calibration process is finished, the printing of one or more objects can take place.

**Figs. 15** to 20D and 21 demonstrate a printing system **17** according to some possible embodiments. In general, the printing system **17** shown in **Figs. 15** to **21** is configured to maintain and handle a continuous feed of objects **101** (also referred to herein as a stream of objects) to be printed on, while maintaining minimum gap (e.g., about 2 mm to 100 mm) between adjacent objects **101**.

With reference to **Fig. 15**, in this non-limiting example the printing system **17** generally comprises the closed loop lane **10** and the print head assembly **100** mounted in the printing zone **12z** of the lane **10** on elevator system **27**. Other parts of the printing system (e.g., priming unit, curing unit, etc.) are not shown for the sake of simplicity. The lane **10** is generally a circular lane; in this non-limiting example having a substantially elliptical shape. The lane **10** may be implemented by an elliptical ring shaped platform **10p** comprising one or more tracks **10r** each having a plurality of sliding boards **22** mounted thereon and configured for sliding movement thereover. At least two sliding boards **22**, each mounted on a different track **10r**, are radially aligned relative to the lane **10** to receive a detachable platform **37** and implement a carriage Cᵢ configured to hold a plurality of objects **101** to be printed on, and advance them towards the printing zone **12z**. In this non-limiting example the lane **10** comprises two tracks **10r** and the sliding boards **22** slidably mounted on the tracks **22** are arranged in pairs, each sliding board of each pair of sliding boards being slidably mounted on a different track **22**, such that a plurality of slidable carriages **C₁**, **C₂**, **C₃**,..., are constructed by attaching a detachable platform **37** to each one of said pairs of sliding boards **22**.

Implementing an elliptical lane **10** may be carried out using straight rails connected to curved rails to achieve the desired continuous seamless movement on the elliptical track. Accordingly, the sliding boards **22** may be configured to enable them smooth passage over curved sections of the lane **10**. Printing zones **12z** of the lane **10** are preferably located at substantially straight portions of the elliptical lane **10** in order devise printing zones permitting high accuracy, which is difficult to achieve over the curved portions of the lane **10.** In some embodiments curved shape tracks have runners with a built in bearing system's tolerance to allow the rotation required by the nonlinear/curved parts of the track. Those tolerances typically exceed the total allowable error for the linear printing zone **12z**. In the printing linear zone **12z**, the tolerable errors allowed are in the range of few microns, due to high resolution requirements for resolution greater than 1000 dpi for high image qualities/resolutions. For such high resolutions require 25 micron between dots lines, which means that about ±5 micron dot accuracy is required in order for the sliding boards to pass the printing zone **12z** in an accumulated printing budget error in X,Y,Z axis that will not pass the required ±5micron tolerable dots placement position error.

The printing head assembly **100** comprises an array of printing head units **35** removably attached to a matrix board **30** and aligned thereon relative to the tracks **10r** of the lane **10**. The matrix board **30** is attached to the elevator system **27** which is configured to adjust the height of the printing elements of the printing heads units **35** according to the dimensions of the objects **101** held by the carriages **C₁**, **C₂**, **C₃**,..., approaching the printing zone **12z**.

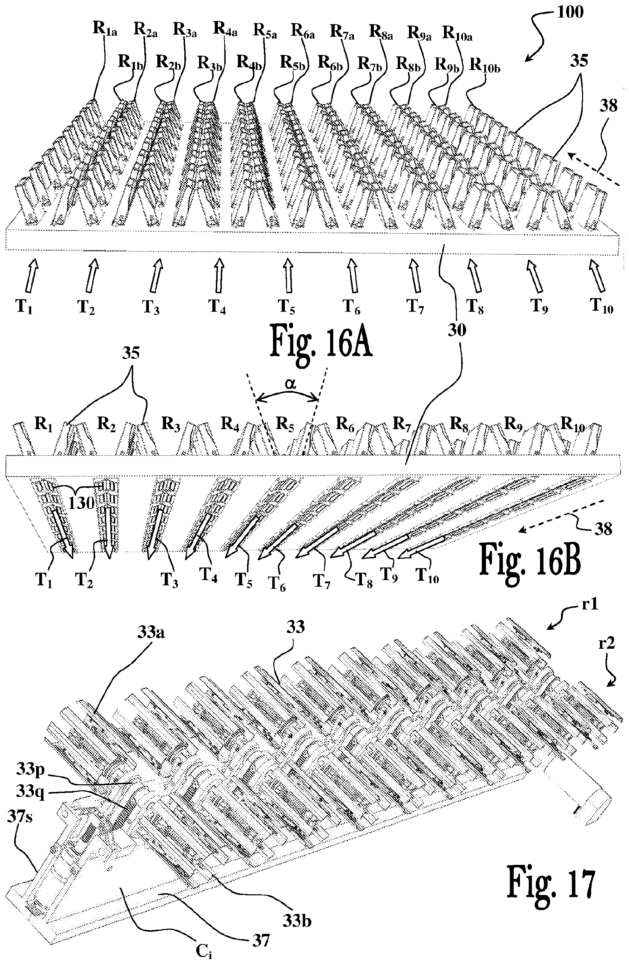

Referring now to Figs. **16A** and **16B**, the array of print head units **35** of print head assembly **100** may comprise a plurality of sub-arrays **R₁**, **R₂**, **R₃**,..., of print head units **35**, each one of said sub arrays **R₁**, **R₂**, **R₃**,..., configured to define a respective printing route **T₁**, **T₂**, **T₃**,..., in the printing zone **12z**. As illustrated in Figs. **16A** and **16B**, the printing routes **T₁**, **T₂**, **T₃**,..., are defined along a printing axis **38** e.g., being substantially aligned with a the tacks **10r** of the lane **10**. In this way, objects **101** moved along a printing route **Tⱼ** (j = 1, 2, 3, ...) are passed under the printing elements **130** of the print heads of the respective sub-array **Rⱼ**.

Each carriage Cᵢ being loaded onto the lane **10** at a loading zone (**306l**) with a plurality of objects **101** is advanced through the various stages of the printing system **17** (e.g., priming **204**, printing **12z**, curing **202** and inspection **16**), and then removed from the lane **10** at an unload zone **306u**, thereby forming a continuous stream of objects **101** entering the lane and leaving it after being printed on, without interfering the movement of the various carriages **Cᵢ**. In this way, the closed loop lane **10** provides for a continuous feed of carriages **C₁**, **C₂**, **C₃**,..., loaded with objects **101** into the printing zone **12z**, and independent control over the position and speed of each carriage Cᵢ (where i = 1, 2, 3, ... is a positive interger) maintains a minimum gap (e.g., of about 1cm) between adjacent carriages Cᵢ in the printing zone **12z**.

In this non-limiting example the print head assembly **100** comprises ten sub-arrays **Rⱼ** (j = 1, 2, 3, ..., 10 is a positive integer) of printing head units **35**, each sub-array **Rⱼ** comprising two columns, **Rⱼₐ** and **R_{jb}** (where j = 1, 2, 3, ..., 10, is a positive integer), of printing head units **35**. The printing head units **35** in the columns **Rⱼₐ** and **R_{jb}** of each sub-array **Rⱼ** may be slanted relative to the matrix board **30**, such that printing elements **130** of the printing head units of one column **Rⱼₐ** are located adjacent the printing elements **130** of the printing head units of other column of the sub-array column **R_{jb}**. For example, and without being limiting, the angle α between two adjacent print head units **Rⱼₐ** and **R_{jb}** in a sub-array **Rⱼ** may generally be about 0° to 180°, depending on the number of print head units used. The elevator system **27** is configured to adjust the elevation of the print head units **35** according the geometrical dimensions of the objects **101** e.g., diameter. For example, in some possible embodiments the printing head assembly **100** is configured such that for cylindrical objects having a diameter of about 50mm the printing heads **35** are substantially perpendicular to a tangent at the points on the surface of the object under the printing elements **130** of said printing heads **35**. For cylindrical objects having a diameter of about 25mm the angles between the printing heads remains in about 73 degrees and the tangent is not preserved, which in effect results in a small gap between the printing elements **130** of the print heads **35** and the surface of the objects located beneath them. The formation of this gap may be compensated by careful scheduling the time of each discharge of ink through the printing elements **130** according the angular and/or linear velocity of the object and the size of gap formed between the printing elements **130** and the surface of the objects **101**.

Angular distribution of the print heads is advantageous since it shortens the printing route (e.g., by about 50%), by densing the number of nozzles per area, and as a result shortening the printing zone **12z** (that is very accurate), thereby leading to a total track length that is substantially shortened.

**Fig. 17** illustrates a structure of a carriage **Cᵢ** according to some possible embodiments. In this non-limiting example the carriage **Cᵢ** comprises an arrangement of rotatable mandrels **33** mounted spaced apart along a length of the carriage **Cᵢ**. More particularly, the rotatable mandrels **33** are arranged to form two aligned rows, **r1** and **r2**, of rotatable mandrels **33**, wherein each pair of adjacent mandrels **33a** and **33b** belonging to different rows are mechanically coupled to a common pulley **33p** rotatably mounted in a support member **37s** vertically attached along a length of the detachable platform **37**. The mandrels **33a** and **33b** of each pair of adjacent mandrels **33** belonging to different rows **r1** and **r2** are mechanically coupled to a single rotatable shaft, which is rotated by a belt **33q**.

In some embodiments the same belt **33q** is used to simultaneously rotate all of the pulleys **33p** of the rotatable mandrels arrangement, such that all the mandrels **33** can be controllably rotated simultaneously at the same speed, or same positions, and direction whenever the carriage **Cᵢ** enters any of the priming, printing, and/or curing, stages of the printing system **17**. A gap between pairs of adjacent mandrels **33a** and **33b** belonging to the different rows **r1** and **r2** of mandrels may be set to a minimal desirable value e.g., of about 30mm. Considerable efficiency may be gained by properly maintaining a small gap between carriages (e.g., about 1cm) adjacently located on the lane **10**, and setting the gap between pairs of mandrels **33a** and **33b** belonging to the different rows **r1** and **r2** (e.g., about 30mm, resulting in efficiency that may be greater than 85%).

In order to handle the multiple mandrels **33** of each carriage **Cᵢ** and obtain high printing throughput, in some embodiments all mandrels are rotated with a speed accuracy tolerance smaller than 0.5% employing a single driving unit (not shown). Accordingly, each carriage Cᵢ may be equipped with a single rotation driver and motor (not shown), where the motor shaft drives all of the mandrels **33** using the same belt **33q**. In some embodiments the speed of the rotation of the mandrel **33** is monitored using a single rotary encoder (not shown) configured to monitor the rotations of one of the pulleys **33p**. In this non-limiting example, each row (**r1** or **r2**) of mandrels **33** includes ten pulleys **33p**, each pulley configured to rotate two adjacent mandrels **33a** and **33b** each belonging to a different row **r1** and **r2**, such that the belt **33q** concurrently rotates the ten pulleys, and correspondingly all twenty mandrels **33** of the carriage **Cᵢ** are thus simultaneously rotated at the same speed and direction.

As will be explained hereinbelow with reference to **Figs. 20A** to **20G**, in some possible embodiments the mandrels in the rotatable mandrels arrangement **33** are adjustable mandrels capable of being adjusted to grip and rotate object of different geometrical sizes without requiring replacement of the mandrels, or any of the mandrels' parts. As will be also exemplified below, the printing system **17** may utilize various different adjustable and rotatable object gripping mechanisms, different than the adjustable mandrels.

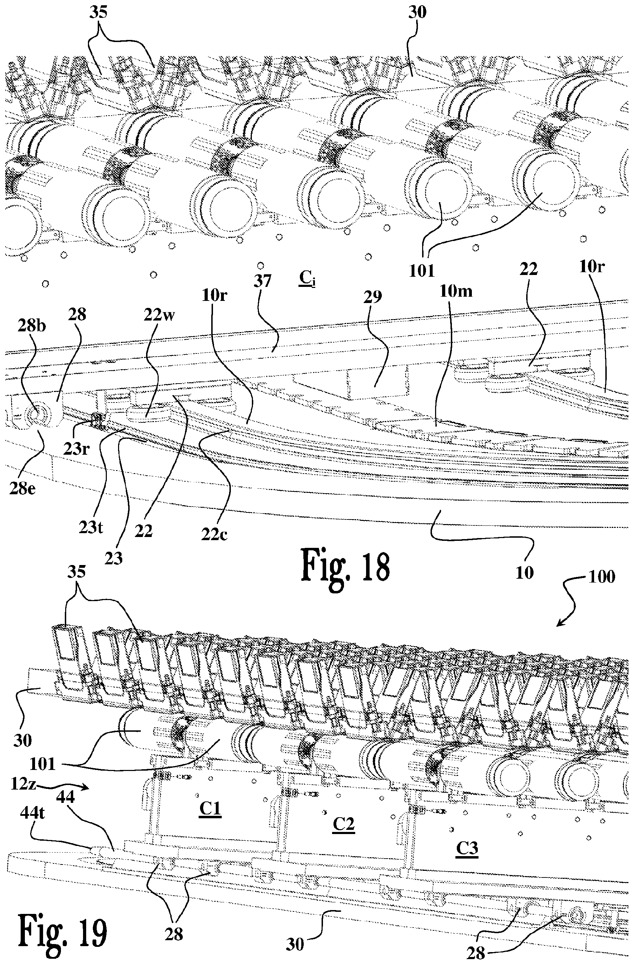

**Fig. 18** shows the coupling of the carriage **Cᵢ** to the lane **10** according to some possible embodiments. Each sliding board **22** in this non-limiting example comprises four horizontal wheels **22w**, where two pairs of wheels **22w** are mounted on each side of the sliding board **22** and each pair of wheels **22w** being pressed into side channels **22c** formed along the sides of the tracks **10r**. The lane **10** may further include a plurality of magnet elements **10m** mounted therealong forming a magnet track (secondary motor element) for a linear motor installed on the carriages **Cᵢ**. A linear motor coil unit **29** (forcer/primary motor element) mounted on the bottom side of each detachable platform **37** and receiving electric power from a power source of the carriage (e.g., batteries, inductive charging, and/or flexible cable) is used for mobilizing the carriage over the lane. An encoder unit **23r** attached to the bottom side of the carriage **Cᵢ** is used to provide real time carriage positioning signal to the controller unit of the carriage. Each carriage **Cᵢ** thus comprises at least one linear motor coil and at least one encoder so as to allow the control unit **300** to perform corrections to the positioning of the carriage **Cᵢ**. In this way linear motor actuation of the carriages Cᵢ may be performed while achieving high accuracy of position of carriage movement, over the linear and curved areas of the lane **10**.

For example, and without being limiting, the magnetic track **10m** used for the linear motors may be organized in straight lines over the straight portions of the lane **10**, and with a small angular gap in the curved portion of the lane **10**. In some embodiments this small angular gap is supported by special firmware algorithm provided in the motor driver to provide accurate carriage movements. The lane may further include an encoder channel **23** comprising a readable encoded scale **23t** on a lateral side of the channel **23**. The encoder scale **23t** is preferably placed around the entire elliptical lane **10**, and the encoder unit **23r** attached to the bottom side of each carriage **Cᵢ** is introduced into the encoder channel **23** to allow real time monitoring of the carriage movement along the lane **10**.

High resolution encoding allows closing of position loops in accuracy of about 1 micron. For example, and without being limiting, the improved accuracy may be used to provide carriage location accuracy of about 5 microns, in-position time values smaller that 50msec in the printing zone **12z**, and speed accuracy smaller than 0.5%.

**Fig. 19** schematically illustrates simultaneous printing by the print head assembly **100** on surfaces of a plurality of objects **101** carried by three different carriages, **C₁**, **C₂** and **C₃**. In order to enabler high printing resolutions, the movement of the carriages Cᵢ in the printing zone **12z** should be carried out with very high accuracy. For this purpose, in some embodiments, a highly accurate (of about 25 micron per meter) linear rod **44** is installed along the printing zone **12z**, and each carriage Cᵢ is equipped with at least two open bearing runners **28** which become engaged with the linear rod **44** upon entering the printing zone **12z**. In order to facilitate receipt of the linear rod **44** inside the bearing runners **28**, in some embodiments the linear rod **44** is equipped with a tapering end sections **44t** configured for smooth insertion of the rod **44** into the opening **28b** (shown in **Fig. 18**) of the bearing runners **44**. A combination of individual carriage control (driver and encoder on each carriage) allows recognition of the exact position of the tapering entry section **44t** for allowing the carriage Cᵢ to perform slow and smooth sliding of the bearing **28** onto the rod **44**, thereby preventing direct damage to the bearings 28 and to the rod 44. The engagement of the carriage to the linear rod **44** is supported by a special firmware in the controller of the carriage and /or on the motor driver.

**Fig. 20A** provides a closer view of the mandrel arrangement 33 provided in the carriages **Cᵢ**. In some embodiments the mandrels **33** are configured to enable the system to adjust the diameter of the mandrels **33** in order to permit firm attachment to objects **101** having different diameters and lengths (i.e., using a single mandrel type and without requiring mandrel replacement as commonly used in the industry). For this purpose each mandrel **33** may be constructed from a plurality of elongated elements **41a**, where the elongated elements **41a** of each mandrel **33** are connected to a levering mechanism **41v** configured to affect radial movement of the elongated elements **41a** relative to the axis of rotation of the mandrel **33**. The levering mechanism **41v** may employ a tension spring **41s** configured to facilitate controllable adjustment of a length of a central shaft **41r** of the mandrel **33**, such that elongation or shortening of the length of the central shaft **41r** cause respective inward (i.e., increase of mandrel diameter) or outward (i.e., decrease of mandrel diameter) radial movement of the elongated elements **41a** of the mandrel **33**.

For example, and without being limiting, adjusting external diameter of a 25mm mandrel to fit into an object **101** having an inner diameter diameters of 50mm. This type of adjustment is required when different batches of objects **101** are introduced into the printing system (e.g., from a production line) and the setup time required to change the mandrels over the line is affecting the production efficiency. Accordingly, production efficiency can be significantly improved by using the adjustable mandrel setup on the present invention since the dimensions/sizes of all the mandrels are digitally controlled by the control unit **300** to fit into objects of different sizes/dimensions).

In this non-limiting example, the state of the levering mechanism **41v** of each mandrel **33** is changed (i.e., between closed, partially or fully opened, states of the elongated elements **41a**) by movement of a pushing arm **41t** adapted to actuate the levering mechanism by pushing a movable ring **41g**. The movable ring **41g** is slidably mounted over the central shaft **41r** and adapted to push a movable end of the levering arms against the force applied thereon by the tension spring **41s**. The movement of the pushing arms **41t** is facilitated by a rotatable shaft **41f** which angular position is controlled by a cam follower mechanism **41c**. The levering mechanisms **41v** of each row **r1 r2** of rotatable mandrels **33a 33b** is control by a respective rotatable shaft **41f**, and the rotary movement of each rotatable shaft **41f** is controlled by linear (up/down) translations of lifter mechanism **41p**. As seen, a single lifter mechanism **41p** is used to actuate the rotatable shafts **41f** of both rows **r1 r2** of rotatable mandrels **33a 33b**, and thereby guarantee that exactly same state of the levering mechanism **41v** is obtained (i.e., same mandrel diameter is set) in all mandrels **33** of the carriage **Cᵢ**.

**Fig. 20A** exemplifies use of a threaded shaft for actuating the lifter mechanism **41p**, and it is of course possible to implements lifter mechanism **41p** in various other ways e.g., using a pneumatically actuated piston.

**Fig. 20B** demonstrates a mandrel arrangement implementation **43** employing helical gears **43g** to rotate each pair of adjacent mandrels **33a** and **33b**. In this non-limiting example a single elongated and rotatable shaft **43r** is used to simultaneously rotate all of the helical gears **43g** mechanically coupled to it by respective gear wheals **43w** mounted thereon, to thereby guarantee accurately setting the state of the levering mechanisms **41v** of all mandrels in the carriage **Cᵢ** to exactly the same state (i.e., setting the same mandrel diameters in all mandrels).

**Figs. 20C** and **20D** respectively show the mandrel **33** in closed and deployed states. In **Fig. 20C** the state of all levering mechanisms **41v** is set into an undeployed (i.e., tension spring **41s** is in a fully opended/stretched state). And consequently, all elongated elements **41a** are retracted in this state towards the center of mandrel, thereby setting the smallest diameter **D** attainable by the mandrel. In this non-limiting example, a flexible cushion cover **41n** is attached over the elongated elements **41a**. Cushion covers **41n** may be fabricated from a stretchable/compliable material, such as, but not limited to, rubber, silicone, and adapted to provide soft attachment of the mandrel elements to the inner wall of the gripped object **101** and thereby prevent deformation of the object's shape. In this way, the gripping mechanism of the mandrels **33** is adapted to enable gripping an object **101** by attachment of at some predetermined number of discrete section/points on its internal wall surface without applying deforming forces thereover.

**Fig. 20D** shows the mandrel **33** in a deployed sate wherein the levering mechanisms **41v** of the mandrel **33** are actuated to move radially outwardly until their flexible cushion covers **41n** become pressed against discrete sections **101d** of the inner wall of a gripped object **101**. Fir example, and without being limiting, the actuation of the levering mechanism may be stopped once sufficient contact is established, using one or more contact sensors (not shown) in the elongated elements **41a**. In this deployed state the flexible cushion covers **41n** absorbs a substantial portion of the pressure applied by the arms of the levering mechanism **41v** and thus their surface areas at the contact sections **101d** become spatially stretched and substantially increased. In effect, the friction between the contact sections **101d** over the inner wall of the gripped object **101** and the pressed flexible cushion covers **41n** substantially increases. In this way the inner surface of the gripped object **101** can be contacted at some predefined number of discrete contact sections **101d** to achieve a firm grip of the object **101**, while preventing deformations of the object's shape.

**Figs. 20E** and **20F** demonstrate use of a conical expansion mechanism, which is not covered by the claims, usable for gripping the object **101**. With reference to **Fig. 20E**, the expansion mechanism is implemented in this configuration by a hollow cylindrically shaped element **46** having a longitudinal cut **46s** along its length (from end to end), which thus creates an open loop "C"-like cross-sectional shape. The cylindrical element **46** is fabricated from an elastic material (e.g. aluminum, plastic, rubber, silicon, etc.) to permit radial expansion of its shape and controllably increasing its diameter **DD**. This mechanism is useful for use as a gripping mechanism for achieving a firm grip of a hollow object **101** by introducing the cylindrical element **46** into the object **101** and radialy expanding its circumference until it contacts the inner wall of the object **101**. In possible configurations one or more contact sensors (not shown) may be used to indicate when contact between the outer surface(s) of the cylindrical element **46** and the inner surface of the object **101** been established. As exemplified in **Fig. 20E** the outer surface of the cylindrical element **46** may comprise longitudinal slits **46t** for improving the grip over the inner wall of the object **101** and increasing friction.

**Fig. 20F** is a cross-sectional view showing a conical expansion grip mechanism. In this configuration two conical elements **46c**, which tapering ends are introduced into the hollow element **101**, are used to gradually increase the diameter **DD** of the cylindrical elements **46** by gradually moving them one towards the other. As the conical elements **46c** are moved one toward the other they become pressed against the end openings **46e** of the cylindrical element **46** and thus apply outwardly directed radial forces thereover, which cause the cylindrical element **46** to radially expand. The movement of the conical elements **46c** continues until the outer surface of the cylindrical element **46** are pressed against the inner surface of the hollow object **101** and a firm grip thereof is obtained.

The gradual movement of the conical elements **46c** may be achieved by using a rotatable threaded shaft **46f** over which the conical elements **46c** are threaded such that rotations of the shaft **46f** in one direction relative to the conical elements **46c** (i.e., the conical elements **46f** are permitted to linearly move along the axis of the shaft **46** but rotary movement thereof is prevented) causes gradual movement of the conical elements **46f** one towards the other, and rotations of the shaft **46f** in the other direction causes gradual movement of the conical elements **46f** one away from the other. As demonstrated in **Fig. 20E**, the outer surface of the cylindrical element **46**, or some discrete portions thereof, may be covered by flexible cushion covers **41n** to increase friction and absorb substantial portion of the pressure applied by the radially expanded cylindrical element **46** over the internal walls of the object **101**, thereby allowing a firm grip of the object **101** while, preventing deformation of its shape.

**Fig. 20G** demonstrates use of an inflatable gripping mechanism usable for gripping the hollow object **101**. In this configuration the rotatable shaft **46f** comprises an inflatable element **45b** attached over a portion of its length, and at least one fluid passage **46p** for flowing inflating media (e.g., water, air, or other fluids) into the inflatable element **45b** via one or more openings **45p** that communicates the at least one fluid passage **46p** with the interior of the inflatable element **45b**. In use, the free end section of the shaft **46f** carrying the inflatable element **45b** is inserted into the hollow element **101** in a deflated sate, and thereafter the inflating media is streamed through the at least one fluid passage **46p**, and the one or more openings **45p**, into the inflatable element **45b**. The inflatable element **45b** is expanded inside the hollow element **101** until it contacts the inner wall of the hollow element **101** and establish sufficient grip thereover.

As in the previous configurations described hereinabove, one or more contact sensors (not shown) may be used to indicate that contact between the inflatable element **45b** and the inner wall of the object **101** been established. Alternatively, a pressure sensor (not shown) may be used to measure the pressure of the inflating media inside the fluid passage **46p** and indicate that contact has been established with the inner wall of the object **101** when identifying that increased pressure conditions evolve thereinside. The inflatable element **45b** may be implemented by one or more balloons made from a compliant, or semi-compliant material (e.g., rubber ), and its outer surface of the may be covered by one or more layers of flexible cushion cover, or any other suitable friction enhancing material (not shown e.g., aluminum, plastic).

In some embodiments the lengths of the mandrels **33** may be also controllably adjusted according to the geometrical dimensions of the objects **101**. For example, and without being limiting, each mandrel **33** may be configured to be inflated by preload pressure applied thereto, and stopped whenever reaching the length of the mandrel **33** i.e., when central shaft **41r** elongation reaches the length of the inner space of the object **101**. The mandrel elongation mechanism may be deflated by applying pressure higher than the preload for load/unload purpose. In this example, each carriage **Cᵢ** is configured to controllably inflate/deflate 20 mandrels **33** using a single unit activated by pressure. However, mandrel length adjustment is not necessarily required because digital printing typically does not require contact with the surface of the object **101** being printed. Accordingly, providing mechanical support by the mandrels **33** over a partial length of the objects **101** will be sufficient in most cases.

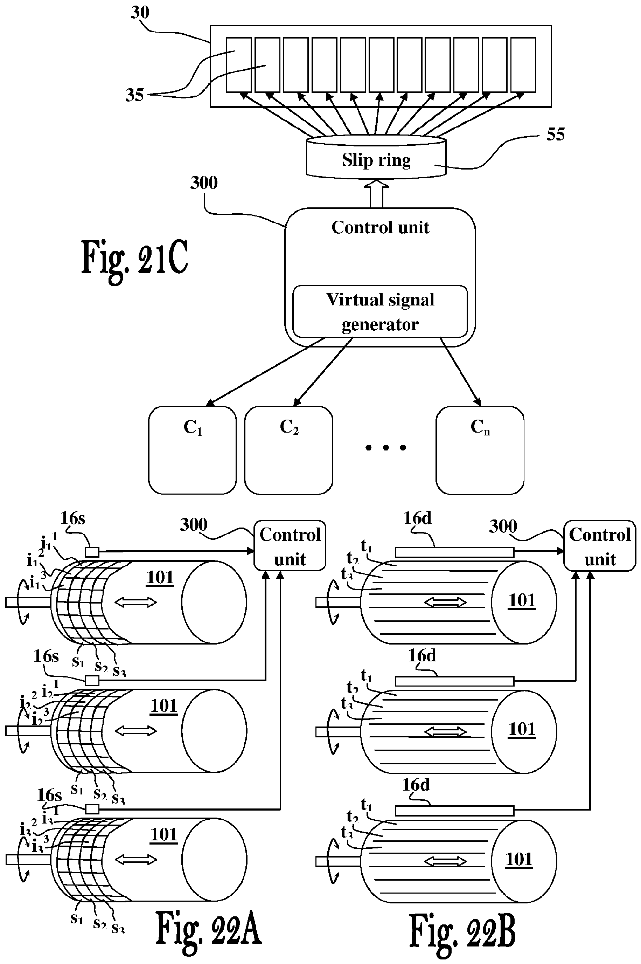

**Fig. 22A** demonstrates use of a single imager **16s** per stream of objects for successively scanning outer surface of respective objects **101** in the inspection unit **16** of system **17**. The scanning approach of the invention is exemplified in **Fig. 22A** for a plurality of imagers **16s**, three such imagers being shown in this non-limiting example, associated with a corresponding plurality of object streams, three objects **101** being shown in the figure constituting three object streams. Each imager **16s** has a pixel array and is of a relatively small size as compared to the object's being imaged, and operates such that each pixel successively acquires (during the object's linear and rotational movements) sequences of images **i₁**, **i₂**, **i₃**,... (also referred to herein as fragmental images), thus enabling to inspect the pattern being printed onto the object in real time (without a need to stop the movement of the conveyor or transferring the object to a separate inspection station). For example, with the sensors size of 11mm with 523 21-micron pixels, circumferential reading revolution (in the rotation axis) of about 180mm can be obtained.. It should be understood, that the resolution in the rotation axis depends also on the velocity of rotation, the slower the rotation the higher the resolution. For example, the rotation velocity of 5msec provides up to 63micron equal to 400dpi. The small pixel-images along circumferential strips **s₁**, **s₂**, **s₃**,... , defined along the respective object **101** according to axial movement thereof, where the sequence of small images **i₁**, **i₂**, **i₃**,... of each imaging strip sᵢ (i≥1 is a positive integer) are acquired during rotary movement of the object **101**.

It should be noted that the inspection unit **16** is not necessarily an independent unit residing at a certain portion/zone on the lane **10**, downstream to the curing process **202**, for inspection of the objects **101** after completing the printing and curing processes (e.g., quality control), as shown in **Fig. 1**. As exemplified in **Figs. 22A** and **22B**, by using the image slicing scanning approach, the inspection unit **16** may be integrated into the printing **100** and/or the curing **202** units or wagons (carriage) Ci.

As exemplified in Fig. **22A**, a sequence of a small images **i₁**, **i₂**, **i₃**,... is acquired along each of the circumferential strips **s₁**, **s₂**, **s₃**,... , spanning the entire length of each strip sᵢ, while the object **101** is being rotated and axially translated during one or more of the specific processes applied on the zones on the lane (e.g., in the printing or curing units). After completing the specific process (e.g., printing or/and curing) the images **i₁**, **i₂**, **i₃**,... of each strip sᵢ are sequentially tailored by the control unit **300** to construct a continuous strip image of the respective circumferential slice of the object **101**, and the strip images of the different strips sᵢ are then orderly tailored by the control unit **300** to construct a full image of the treated object **101**.

In possible embodiments a separate image processing unit (not shown) is used to acquire the images from the imagers **16s** and construct the object image from the acquired images.

In some embodiments, the high precision provided by the printing system **17** for the axial and rotary movements (of about 1 micrometer for both axial and rotary) of the objects is utilized to compensate for low resolution images acquired by the imager units **16s**. More particularly, the inspection system **16** may be configured to acquire the images sᵢ after application of each axial movement and each rotary movement of the object **101**, and to tailor the images sᵢ into the full image according to the movement steps of the object. In this way the full image of the object may be constructed to provide a substantially greater resolution, as defined by the step size of the axial and rotary movements, than the geometrical resolution of the imager **16s**.After completing the process and obtaining the full image of the treated object **101**, the full image of the printed pattern on the outer layer may be analyzed by the control unit **300** (and/or by a separate computer device) to determine if the applied process complies with requirements of the system **17**. If the analysis of the full object image reveals that there are defects, the control unit **300** may issue instructions/signals to return the object **101** to the respective lane zone/unit to correct the identified defects, while indicating the specific locations on the surface of the object according to the specific strip images sᵢ and specific image location(s) in each one of the strips sᵢ in which the defects were found. Alternatively, in some possible embodiments, the control unit is configured to analyze each image iᵢ immediately after it is acquired, to identify possible process defects appearing therein, and carry out the needed corrections instantly while the specific process is carried out.

**Fig. 22B** demonstrates a scanning process utilizing an elongated imager unit **16d** for scanning the outer surface of an object **101**. In this embodiment an ordered sequence of elongated images **t₁**, **t₂**, **t₃**,... (representing a line of pixels) are acquired by the control unit **300** (or by another image processing unit) along the circumference of the object **101** as it is being rotated during a specific process on one of the lane zones (e.g., printing or curing). Accordingly, the length of the elongated imager units **16d** should cover the entire, or a substantial portion, of the length of the processed object **101**. For example, and without being limiting, in some possible embodiments the length of the elongated imager units **16d** is about L1=22mm to L2=300mm.

If for example an image of 1600dpi is scanned (15micron between pixels) with a scanner having 400 dpi and while object stepping each revolution 15micron for 4 times, the result will be a 400dpi × 4 images and will be received and processed by the controller software to 1600 dpi scan, said could be created hence each image is similar to other with 15 micron shift in the scan. Having those 15 micron shift in scans provide data of 4 times higher than the resolution of the sensor (400dpi therefore sensor basic unit is 63.5 micron), thus allowing processing a higher resolution from those 4 images, simulating sensors having 63.5/4=15.8 micron. After performing the mentioned 4steps for receiving the higher resolution a larger movement will be required from the object in relation to the scanner to jump to the next position (i.e. from S1 to S2).

Accordingly, in this example a full image of the processed object layer/image **101** may be obtained after completing one full rotation of the object **101**. The control unit **300** may be configured to construct the full image and then check it to identify defects requiring repeating process steps in order to correct the defects. Accordingly, the control may indicate the specific sections of the object **101** in which there are defects, as defined by the image number i of the respective image tᵢ in the ordered sequence of images **t₁**, **t₂**, **t₃**,... , in which correction are needed. Alternatively, in some possible embodiments, the control unit **300** is configured to analyze each images tᵢ immediately after it is acquired, to identify possible process defects appearing therein, and carry out the needed corrections instantly while the specific process is carried out.

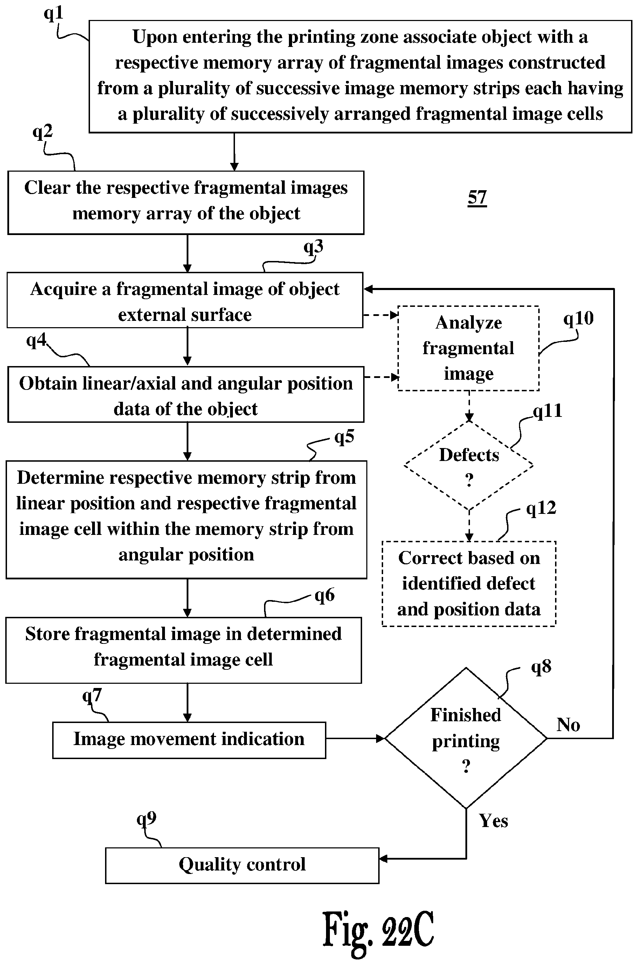

**Fig. 22C** is a flowchart exemplifying a possible object scan process **57** of the inspection unit as may be performed according to some possible embodiments. The process starts in step **q1** in which upon introducing a carriage **Cᵢ** with objects **101** into a process zone of the lane **10** (e.g., printing zone). Each one of the objects is associated with a respective image memory array of fragmental images, each array comprising a plurality of successive memory strips having a plurality of successively arranged fragmental image cells. The respective image memory array of each object **101** is cleared in step **q2**, and in step **q3** fragmental images of the external surface of each object **101** are acquired by the respective imager unit. As demonstrated in step **q4**,each acquired fragmental image is associated with a specific axial position and a specific angular position according to the axial and rotary encoders movement steps performed during the process.

In step **q5** respective memory strip of acquire fragmental image is determined from the axial position, and a respective fragmental image cell within the memory strip, for storing the acquired fragmental image, is determined from angular position. The acquired fragmental image is then stored in the respective fragmental image cell of the image memory array. If further objects movements are carried out in step **q7**, it is checked in step **q8** if the process applied to the object has been finished. If the process proceeds, then the control is passed to step **q3** for acquisition of a new fragmental image and storing it a respective image cell in the preceding steps. If it is determined in step **q8** that the process is finished than in step **q9** the full image obtained in the image memory array is analyzed to identify possible defects appearing therein.

Steps **q10** to **q12** are optionally (indicated by dashed lines) carried out after each image acquisition step **q3** and determination of the axial and angular position of the object **101** in step **qb**4, to allow instant identification of defects in each acquired fragmental image immediately after it is acquired.

Figs. **21A** to **21C** demonstrate possible control schemes that can be used in the printing system **17**. One of the tasks of the control unit **300** is to synchronize print heads data jetting signals from each mandrel under the print heads assembly **100** (exemplified in **Fig 21B**) or adjust the speed of the carriage to align it with strict control done by the controller/driver on each carriage Ci, so as to adjust a virtual signal for all print heads units and carriages movement or/and rotation (demonstrated in **Fig. 21C**). For this purpose the control unit **300** is configured to synchronize the ink jetting data supplied to the print heads according to the position of each carriage Cᵢ in the printing zone **12z**, while simultaneously multiple carriages **Cᵢ** are being advanced inside the printing zone and their mandrels **33** are being rotated under its printing head arrays. **Fig. 21A** shows a general control scheme usable in the printing system **17**, wherein the control unit **300** is configured to communicate with each one of the carriages **Cᵢ** to receive its carriage position data and mandrel angular position (orientation, i.e., using rotation encoder) data, and generate the ink jetting data **56d** supplied to the print head assembly **100** to operate each one of the printing heads **35** having objects **101** located under its nozzles.

**Fig. 21A** demonstrates possible approaches for communication between the control unit **300** and the carriages **Cᵢ**. One possible approach is to establish serial connection between the plurality of carriages **Cᵢ** moving on lane **10** e.g., using a flexible cable (not shown) to electrically (and pneumatically) connect each pair of consecutive carriages **Cᵢ** on the lane **10**. In this approach the carriage/mandrel the electrical supply, position data, and other motion and control data are serially transferred along the serial connection of the carriages **Cᵢ**. The data communication over such serial communication connectivity may be performed, for example, using any suitable serial communication protocol (e.g., Ethercat, Etheret and suchlike). In possible embodiments, electrical connection between the carriage **Cᵢ** and the control unit 300 may be established using an electrical slip ring and/or wirelessly (e.g., Bluetooth, IR, RF, and the like for the data communication and/or a wireless power supply scheme such as inductive charging).

An alternative approach may be to establish direct connection, also called star connection (illustrated by broken arrowed lines) between the control unit **300** and power supply (not shown) units and the carriages **Cᵢ** on the lane **10**. Such direct connection with the carriages **Cᵢ** may be established using an electrical slip ring and/or wirelessly (e.g., Bluetooth, IR, RF, and the like for the data communication and/or a wireless power supply scheme such as inductive charging).

A switching unit **56s** may be use in the control unit **300** for carrying out the printing signals switching (index and encoder signals and other signals) of each carriage **Cᵢ** to the respective print head units **35** above the carriages **C;** traversing the printing zone **12z**. The switching unit **56s** may be configured to receive all printing signals from all the carriages **Cᵢ** and switch each one of the received printing signals based on the position of carriages **Cᵢ** with respect to the relevant print heads **35**.

**Fig. 21A** also demonstrates a possible implementation wherein the control unit **300** is placed on one of the carriages **Cᵢ**; in this non-limiting example on the first carriage **C₁**. Each carriage **Cᵢ** may also include a controller (not shown) configured to control the speed of the carriage over the lane **10**, the rotation of the mandrels **33**, the data communication with the control unit **300**, and performing other tasks and functionalities of the carriage as required during the different stations (e.g., priming, curing, inspection, loading etc.) along the lane **10**. **Fig. 21A** further shows an exemplary control scheme usable in each carriage **Cᵢ** for controlling the speed of the carriage. In this control scheme a driver unit **51** is used to operate an electric motor **52** according to speed control data received from the control unit **300**, and an encoder **53** coupled to the motor, and/or to rotating element associated with it, is used to acquire data indicative of the current speed/position of the carriage **Cᵢ** and feeding it back to the driver unit, to thereby establish a closed loop local control.

The control unit **300** may be configured to implement independent control of the carriage **Cᵢ** typically requires monitoring and managing carriage movement and mandrel rotation speeds, and optionally also full stop thereof, at different stages of the printing process carried out over the elliptic lane **10** (e.g., plasma treatment, UV, inspection, printing, loading/unloading). For example, and without being limiting, the control unit **300** may be configured to perform loading/unloading of a plurality of objects **101** on mandrels **33** of one carriage, simultaneously advance another carriage in high speed through the printing zone **12z** while printing desired patterns over outer surfaces of a plurality of objects **101** carried by the carriage, and concurrently advance and slowly rotate mandrels of yet another carriage under a UV curing process. The control unit **300** is further configured to guarantee high precision of the carriage movement and mandrel rotation of the carriages **C;** traversing the printing zone **12z** e.g., to maintain advance accuracy of about 5 microns for high print resolution of about 1200dpi

In some possible embodiments each wagon is equipped with two driver units **51**, two motors **52** (i.e., a linear carriage movement motor and a mandrel rotative motor), and one or more high resolution position encoders **53** (i.e., a linear encoder and a rotative encoder) which are configured to operate as an independent real time motion system. Each one of the drivers is configured to perform the linear or rotary axis movement, where the carriage linear advance and mandrels rotation per carriage (or per mandrel in other models) according to a general control scheme that is optimized to achieve high precision in real time. Accordingly, each carriage can effect both linear and rotatary motion of the objects,

Figs. **21B** and **21C** are block diagrams schematically illustrating possible control schemes usable for to achieve synchronization between the carriages Cᵢ and the print head units **35** of the print head assembly **100**. **Fig. 21B** demonstrates a multiple signal synchronization approach, wherein position (linear of the carriage and/or angular of the mandrels) data from each carriage **Cᵢ** is received and processed by the control unit **300**. The control unit **300** process position data, accurately determines which carriage **Cᵢ** is located under each print head unit **35**, and accordingly generates control signals for activation of the print head units **35**. The control signals are delivered to the print head assembly **100** through an electrical slip ring mechanism **55** (or any other suitable rotative cable guide). In this configuration each carriage **Cᵢ** is independently controlled with respect to its speed and position on the lane **10**.

**Fig. 21B** demonstrates another approach employing a single virtual synchronization signal that synchronizes mandrel rotations, speed and position, of all carriage **Cᵢ** with the print head units **35** of the print head assembly **100**. In this embodiment the control unit **300** is configured to provide a virtual pulse to the carriages Cᵢ that receives the virtual pulse and are then accordingly aligned. Once aligned with the virtual pulse, synchronization between the rotation requested and required is achieved. Under such synchronization the controller may use the virtual signal to initiate the print heads units ejection and printing.

In a possible embodiment the electrical slip ring mechanism **55** is installed at the middle of the elliptic lane **10**, and the carriages **Cᵢ** are electrically linked to the print head assembly via flexible cables (that are in between the carriages) electrically coupled to the electrical slip ring mechanism **55**. The electrical slip ring mechanism **55** may be configured to transfer the signals from the carriages **Cᵢ** to the switching unit **56s** of the control unit **300**, which generates control signals to operate the printing heads **35** for printing on the objects held by the respective carriages **Cᵢ** traversing the printing zone **12z**. In other possible scenarios the carriages **Cᵢ** in the printing zone **12z** are synchronized to one virtual pulse to create a synchronized fire pulse to the print head units **35** and thereby allow single print head printing on a plurality of different tubes carried by different carriages **Cᵢ** at the same time.

With this design the printing system is capable of maintaining high efficiency of printing heads utilization in cases wherein the length of the objects **101** is greater than the length of a print head, and maintain high printing efficiency in cases wherein a single print head is printing simultaneously on two different objects **101**. The print heads **35** may be organized to form a 3D printing tunnel shape.

Printing systems implementation based on the techniques described herein may be designed to reach high throughputs ranging, for example, and without being limiting, between 5,000 to 50,000 objects per hour. In some embodiments the ability to simultaneously print on a plurality of objects traversing the printing zone by the print head assembly may yield utilization of over 80% (efficiency) of the printing heads.

Functions of the printing system described hereinabove may be controlled through instructions executed by a computer-based control system. A control system suitable for use with embodiments described hereinabove may include, for example, one or more processors **302a** connected to a communication bus, one or more volatile memories **56m** (e.g., random access memory - RAM) or non-volatile memories (e.g., Flash memory). A secondary memory (e.g., a hard disk drive, a removable storage drive, and/or removable memory chip such as an EPROM, PROM or Flash memory) may be used for storing data, computer programs or other instructions, to be loaded into the computer system.

For example, computer programs (e.g., computer control logic) may be loaded from the secondary memory into a main memory for execution by one or more processors of the control system. Alternatively or additionally, computer programs may be received via a communication interface. Such computer programs, when executed, enable the computer system to perform certain features of the present invention as discussed herein. In particular, the computer programs, when executed, enable a control processor to perform and/or cause the performance of features of the present invention. Accordingly, such computer programs may implement controllers of the computer system.

As described hereinabove and shown in the associated Figs., the present invention provides a printing system for simultaneous printing on a plurality of objects successively streamed through a printing zone, and related methods. While particular embodiments of the invention have been described, it will be understood, however, that the invention is not limited thereto, since modifications may be made by those skilled in the art, particularly in light of the foregoing teachings. As will be appreciated by the skilled person, the invention can be carried out in a great variety of ways.

## Claims

1. A printing system (17 - Fig. 17) for printing on curved surfaces of a plurality of objects (101), the printing system comprising:
a support platform for supporting and moving said plurality of objects along a closed-loop lane (10) independently controlled with respect to its speed and position;
a plurality of grippers (33 - Fig. 17; Fig. 20A) mounted spaced apart along a length of said support platform, each of said plurality of grippers configured for holding and rotating a respective object thereon at a predetermined working distance between the curved surface of the object and respective print head units (35) arranged along a zone of the closed-loop lane, each of said plurality of grippers having a circular array of spaced-apart elongated elements (41a - Fig. 20A; Fig. 20B) substantially parallel to a central axis of the gripper and a levering mechanism configured for simultaneously moving said elongated elements towards and away said central axis of said gripper, thereby varying cross-sectional dimensions of said grippers for fitting them into objects of different dimensions; and
a control unit configured and operable to adjust the cross-sectional dimensions of said plurality of grippers in order to fit them into said plurality of objects, rotate said objects and move said support platform along said closed-loop lane for simultaneously printing on the plurality of objects by said print head units.

2. The printing system of Claim 1, wherein each of said plurality of grippers is configured for radial expansion, or retraction, while maintaining its circular shape, thereby preventing deformation of the object being thereby held.

3. The printing system of Claim 2, comprising one or more contact sensors arranged in the elongated elements for stopping the actuation of the levering mechanism when sufficient contact is established with an inner surface of the object.

4. The printing system of anyone of claims 1-3, comprising cushion elements formed on the spaced-apart elements of the plurality of grippers, by which the gripper contacts an inner surface of the object placed thereon.

5. The printing system of Claim 1, wherein each of the plurality of grippers comprises a pushing arm adapted to actuate the levering mechanism by pushing a movable ring slidably mounted over a central shaft of the gripper and adapted to push a movable end of the levering mechanism against a return force applied by a tension spring.

6. The printing system of any one of the preceding claims, wherein the plurality of grippers are arranged spaced apart along a length of the support platform to form two parallel rows of the grippers extending in opposite directions.

7. The printing system of claim 6, wherein pairs of adjacent grippers belonging to different rows are mechanically coupled one to the other by a common pulley rotatably mounted in a support member vertically attached along a length of the support platform, and wherein the pairs of adjacently located grippers belonging to the different rows are mechanically coupled to a single rotatable shaft rotated by a belt.

8. The printing system of Claim 7, wherein the pairs of adjacently located grippers belonging to different rows are coupled to a belt configured to rotate said grippers at the same speed and direction whenever the support platform enters a priming, printing, and/or curing, zone of the printing system.

9. The printing system of claim 1 **characterized in that** the support platform is configured to translate said objects in said printing system along an axis of translation, and wherein each one of the plurality of grippers being configured for holding a respective one of the objects and rotating said object about its axis of translation.

10. The printing system of claim 1, comprising a plurality of the support platforms coupled to the closed-loop lane and serially connected by a flexible cable configured to provide power supply and communicate position data, motion data, and control data, with the control unit.

11. The printing system of claim 1, comprising a plurality of the support platforms coupled to the closed-loop lane and directly connected to the control and a power supply by a star connection.

12. The printing system of claim 11 comprising a slip ring configured for electrical connection to the control unit and to the power supply.

13. The printing system of claim 10 or 11 wherein the control unit comprises a switching unit configured for switching of printing signals of each support platform to respective print head units above the support platforms traversing a printing zone of the system.

14. The printing system of claim 13 wherein the switching unit is configured to receive the printing signals from the support platforms and switch each of the received printing signals based on position of the support platforms with respect to relevant print head units of the system.

15. The printing system of claim 1 wherein the control unit is located on the support platform.

## Patentansprüche

1. Drucksystem (17 - Fig. 17) zum Drucken auf gekrümmten Oberflächen einer Vielzahl von Objekten (101), wobei das Drucksystem umfasst:
eine Stützplattform zum Stützen und Bewegen der Vielzahl von Objekten entlang einer geschlossenen Bahn (10), die in Bezug auf ihre Geschwindigkeit und Position unabhängig gesteuert werden;
eine Vielzahl von Greifern (33 - Fig. 17; Fig. 20A), die beabstandet entlang einer Länge der Stützplattform angebracht sind, wobei jeder der Vielzahl von Greifern dazu eingerichtet ist, ein jeweiliges Objekt in einem vorbestimmten Arbeitsabstand zwischen der gekrümmten Oberfläche des Objekts und jeweiliger Druckkopfeinheiten (35), die entlang einer Zone der geschlossenen Bahn angeordnet sind, zu halten und zu drehen, wobei jeder der Vielzahl von Greifern eine kreisförmige Anordnung beabstandeter länglicher Elemente (41a - Fig. 20A; Fig. 20B), die im Wesentlichen parallel zu einer Mittelachse des Greifers sind, und einen Hebelmechanismus, der dazu eingerichtet ist, die länglichen Elemente auf die Mittelachse des Greifers zu und von ihr weg gleichzeitig zu bewegen, aufweist, wodurch die Querschnittsabmessungen der Greifer verändert werden, um sie in Objekte mit unterschiedlichen Abmessungen einzupassen; und
eine Steuereinheit, die dazu eingerichtet und betreibbar ist, die Querschnittsabmessungen der Vielzahl von Greifern anzupassen, um sie in die Vielzahl von Objekten einzupassen, die Objekte zu drehen, und die Stützplattform entlang der geschlossenen Bahn zu bewegen, um die Vielzahl von Objekten durch die Druckkopfeinheiten gleichzeitig zu bedrucken.

2. Drucksystem nach Anspruch 1, wobei jeder der Vielzahl von Greifern zum radialen Aufweiten, oder Einziehen, während er seine Kreisform beibehält, eingerichtet ist, wodurch eine Verformung des dadurch gehaltenen Objekts verhindert wird.

3. Drucksystem nach Anspruch 2, umfassend einen oder mehrere Kontaktsensoren, die in den länglichen Elementen angeordnet sind, um die Betätigung des Hebelmechanismus zu stoppen, wenn ein ausreichender Kontakt mit einer Innenfläche des Objekts hergestellt ist.

4. Drucksystem nach einem der Ansprüche 1-3, umfassend an den beabstandeten Elementen der Vielzahl von Greifern ausgebildete Polsterelemente, durch die der Greifer eine Innenfläche des darauf platzierten Objekts berührt.

5. Drucksystem nach Anspruch 1, wobei jeder der Vielzahl von Greifern einen Schiebearm umfasst, der geeignet ist, den Hebelmechanismus zu betätigen, indem er einen beweglichen Ring drückt, der verschiebbar auf einer zentralen Welle des Greifers angebracht ist und geeignet ist, ein bewegliches Ende des Hebelmechanismus gegen eine durch eine Zugfeder aufgebrachte Rückstellkraft zu drücken.

6. Drucksystem nach einem der vorhergehenden Ansprüche, wobei die Vielzahl von Greifern beabstandet entlang einer Länge der Stützplattform angeordnet ist, um zwei parallele Reihen von Greifern zu bilden, die sich in entgegengesetzte Richtungen erstrecken.

7. Drucksystem nach Anspruch 6, wobei Paare benachbarter Greifer, die zu unterschiedlichen Reihen gehören, mechanisch miteinander durch eine gemeinsame Riemenscheibe gekoppelt sind, die drehbar in einem Stützelement montiert ist, das vertikal entlang einer Länge der Stützplattform angebracht ist, und wobei die Paare von benachbart angeordneten Greifern, die zu den verschiedenen Reihen gehören, mechanisch mit einer einzigen drehbaren Welle gekoppelt sind, die durch einen Riemen gedreht wird.

8. Drucksystem nach Anspruch 7, wobei die Paare von benachbart angeordneten Greifern, die zu unterschiedlichen Reihen gehören, mit einem Riemen gekoppelt sind, der dazu eingerichtet ist, die Greifer mit der gleichen Geschwindigkeit und Richtung zu drehen, wann immer die Stützplattform in eine Priming-, Druck- und/oder Aushärtungszone des Drucksystems eintritt.

9. Drucksystem nach Anspruch 1, **dadurch gekennzeichnet, dass** die Stützplattform dazu eingerichtet ist, die Objekte in dem Drucksystem entlang einer Translationsachse zu verschieben, und wobei jeder der Vielzahl von Greifern dazu eingerichtet ist, ein jeweiliges der Objekte zu halten und das Objekt um seine Translationsachse zu drehen.

10. Drucksystem nach Anspruch 1, umfassend eine Vielzahl der Stützplattformen, die mit der geschlossenen Bahn gekoppelt und durch ein flexibles Kabel seriell verbunden sind, das dazu eingerichtete ist, eine Stromversorgung bereitzustellen und Positionsdaten, Bewegungsdaten und Steuerdaten mit der Steuereinheit zu kommunizieren.

11. Drucksystem nach Anspruch 1, umfassend eine Vielzahl der Stützplattformen, die mit der geschlossenen Bahn gekoppelt und durch eine Sternverbindung direkt mit der Steuerung und einer Stromversorgung verbunden sind.

12. Drucksystem nach Anspruch 11, umfassend einen Schleifring, der für eine elektrische Verbindung mit der Steuereinheit und der Stromversorgung eingerichtet ist.

13. Drucksystem nach Anspruch 10 oder 11, wobei die Steuereinheit eine Schalteinheit umfasst, die zum Schalten von Drucksignalen jeder Stützplattform zu jeweiligen Druckkopfeinheiten oberhalb der Stützplattformen, die eine Druckzone des Systems durchqueren, eingerichtet ist.

14. Drucksystem nach Anspruch 13, wobei die Schalteinheit dazu eingerichtet ist, die Drucksignale von den Stützplattformen zu empfangen und jedes der empfangenen Drucksignale basierend auf der Position der Stützplattformen in Bezug auf relevante Druckkopfeinheiten des Systems umzuschalten.

15. Drucksystem nach Anspruch 1, wobei die Steuereinheit auf der Stützplattform angeordnet ist.

## Revendications

1. Un système d'impression (17 - Fig. 17) pour imprimer sur des surfaces courbes d'une pluralité d'objets (101), le système d'impression comprenant :
une plate-forme de support pour supporter et déplacer ladite pluralité d'objets le long d'une voie (10) en boucle fermée commandée indépendamment en ce qui concerne sa vitesse et sa position ;
une pluralité de préhenseurs (33 - Fig. 17 ; Fig. 20A) montés de façon espacée sur une longueur de ladite plate-forme de support, chaque préhenseur de ladite pluralité de préhenseurs étant configuré pour maintenir et faire tourner un objet respectif sur lui à une distance de travail prédéterminée entre la surface incurvée de l'objet et des unités (35) formant têtes d'impression respectives agencées le long d'une zone de la voie en boucle fermée, chaque préhenseur de ladite pluralité de préhenseurs ayant un réseau circulaire d'éléments allongés espacés (41a - Fig. 20A ; Fig. 20B) sensiblement parallèles à un axe central du préhenseur et un mécanisme de levier configuré pour déplacer simultanément lesdits éléments allongés vers ledit axe central dudit préhenseur et en éloignement de cet axe, faisant ainsi varier les dimensions en coupe transversale desdits préhenseurs de façon à les insérer dans des objets de différentes dimensions ; et
une unité de commande configurée et utilisable pour ajuster les dimensions en coupe transversale des préhenseurs de ladite pluralité de préhenseurs afin de les ajuster dans les objets de ladite pluralité d'objets, pour faire tourner lesdits objets et déplacer ladite plate-forme de support le long de ladite voie en boucle fermée de façon à réaliser une impression simultanément sur les objets de la pluralité d'objets au moyen desdites unités formant têtes d'impression.

2. Le système d'impression selon la revendication 1, dans lequel chaque préhenseur de ladite pluralité de préhenseurs est configuré pour une expansion radiale, ou une rétraction, tout en conservant sa forme circulaire, empêchant ainsi la déformation de l'objet ainsi maintenu.

3. Le système d'impression selon la revendication 2, comprenant un ou plusieurs capteurs de contact agencés dans les éléments allongés pour arrêter l'actionnement du mécanisme de levier lorsqu'un contact suffisant est établi avec une surface interne de l'objet.

4. Le système d'impression selon l'une quelconque des revendications 1 à 3, comprenant des éléments formant coussinets aménagés sur les éléments espacés de la pluralité de préhenseurs, grâce auxquels le préhenseur vient en contact avec une surface intérieure de l'objet placé sur lui.

5. Le système d'impression selon la revendication 1, dans lequel chaque préhenseur de la pluralité de préhenseurs comprend un bras de poussée adapté pour actionner 1e mécanisme de levier en poussant un anneau mobile monté coulissant sur un arbre central du préhenseur et adapté pour pousser une extrémité mobile du mécanisme de levier à l'encontre d'une force de rappel appliquée par un ressort de tension.

6. Le système d'impression selon l'une quelconque des revendications précédentes, dans lequel les préhenseurs de la pluralité de préhenseurs sont disposés de façon espacée sur une longueur de la plate-forme de support pour former deux rangées parallèles de préhenseurs s'étendant dans des directions opposées.

7. Le système d'impression selon la revendication 6, dans lequel des paires de préhenseurs adjacents appartenant à des rangées différentes sont reliées mécaniquement l'une à l'autre par une poulie commune montée à rotation dans un organe de support fixé verticalement sur une longueur de la plate-forme de support, et dans lequel les paires de préhenseurs situées de manière adjacente appartenant aux différentes rangées sont reliées mécaniquement à un seul arbre rotatif entraîné en rotation par une courroie.

8. Le système d'impression selon la revendication 7, dans lequel les paires de préhenseurs situées de manière adjacente appartenant à différentes rangées sont reliées à une courroie configurée pour faire tourner lesdits préhenseurs à la même vitesse et dans le même sens chaque fois que la plate-forme de support entre dans une zone du système d'impression pour l'apprêt, l'impression et/ou le durcissement.

9. Le système d'impression selon la revendication 1, **caractérisé en ce que** la plate-forme de support est configurée de façon à translater lesdits objets dans ledit système d'impression selon un axe de translation, et dans lequel chaque préhenseur de la pluralité de préhenseurs est configuré de façon à maintenir un objet respectif parmi les objets et à faire tourner ledit objet autour de son axe de translation.

10. Le système d'impression selon la revendication 1, comprenant une pluralité de plates-formes de support reliées à la voie en boucle fermée et connectées en série par un câble flexible configuré pour fournir une alimentation électrique et communiquer des données de position, des données de mouvement et des données de commande, au moyen de l'unité de commande.

11. Le système d'impression selon la revendication 1, comprenant une pluralité de plates-formes de support reliées à la voie en boucle fermée et directement reliées à la commande et à une alimentation électrique par une connexion en étoile.

12. Le système d'impression selon la revendication 11 comprenant une bague collectrice configurée pour une connexion électrique à l'unité de commande et à l'alimentation électrique.

13. Le système d'impression selon la revendication 10 ou la revendication 11, dans lequel l'unité de commande comprend une unité de commutation configurée pour commuter des signaux d'impression de chaque plate-forme de support vers des unités formant têtes d'impression respectives au-dessus des plates-formes de support traversant une zone d'impression du système.

14. Le système d'impression selon la revendication 13, dans lequel l'unité de commutation est configurée pour recevoir les signaux d'impression en provenance des plates-formes de support et pour commuter chaque signal parmi les signaux d'impression reçus en fonction de la position des plates-formes de support par rapport aux unités formant têtes d'impression pertinentes du système.

15. Le système d'impression selon la revendication 1, dans lequel l'unité de commande est située sur la plate-forme de support.
